(19)

Europäisches
Patentamt
European
Patent Office
Office européen
des brevets

(11) **EP 1 998 483 A1**

(12) **EUROPEAN PATENT APPLICATION**
published in accordance with Art. 158(3) EPC

(43) Date of publication:
**03.12.2008 Bulletin 2008/49**

(21) Application number: **06729540.2**

(22) Date of filing: **20.03.2006**

(51) Int Cl.:
***H04J 13/00*** *(2006.01)*

(86) International application number:
**PCT/JP2006/305572**

(87) International publication number:
**WO 2007/108097 (27.09.2007 Gazette 2007/39)**

(84) Designated Contracting States:
**DE FR GB**

(71) Applicant: **MITSUBISHI DENKI KABUSHIKI KAISHA**
**Chiyoda-ku, Tokyo 100-8310 (JP)**

(72) Inventor: **NIWANO, Kazuhito**
**Tokyo 100-8310 (JP)**

(74) Representative: **Popp, Eugen et al**
**MEISSNER, BOLTE & PARTNER**
**Postfach 86 06 24**
**81633 München (DE)**

(54) **MOBILE STATION, FIXED STATION, AND RADIO COMMUNICATION SYSTEM**

(57)     A UL-DPCCH processing unit 32 is disposed for setting up a transmission mode of a channel for transmit power control according to a transmission (or reception) status of a channel exclusively used for packet which is monitored by a transmission and reception channel monitoring unit 41, and the channel for transmit power control is multiplied by a channel coefficient corresponding to the transmission mode set up by the UL-DPCCH processing unit 32 and the channel for transmit power control multiplied by the channel coefficient and the channel exclusively used for packet are then multiplexed.

FIG. 3

## Description

Field of the Invention

The present invention relates to a radio communications system comprised of a mobile station, such as a mobile phone, and a fixed station (a base station and a base station control apparatus). More particularly, it relates to a radio communications system comprised of a mobile station and a fixed station for which a channel via which packet data are transmitted is set up.

Background of the Invention

Conventional radio communications systems have been developed assuming continuous and circuit switching data transmission services, such as voice calls. In recent years, discontinuous and packet switching data transmission services, such as Internet services, have been increasing.
With this increase, an extension of specifications which is aimed at application to discontinuous and packet switching data communications has also been made for radio communications systems.
For example, in W-CDMA communication methods which are called third generation, channels for packet transmission are added to the releases 5 and 6 which are releases succeeding the 1999th edition (release 1999) which is the original standard release.
The additional specifications for the release 5 are associated with downlink packet data which a base station transmits to a mobile station and are referred to as HSDPA (High Speed Downlink Packet Access), and channels for packet transmission intended for HSDPA are added to the additional specifications.
In contrast, the additional specifications for the release 6 are associated with uplink packet data which a mobile station transmits to a base station and are referred to as E-DCH (Enhanced-Uplink Dedicated CHannel), and channels for packet transmission intended for E-DCH are added in the additional specifications.
In accordance with the release 1999, a physical channel is defined while being associated with a channel for data transmission (a DCH: Dedicated CHannel) in a higher-level protocol layer.
More specifically, in accordance with the release 1999, a physical channel for data transmission (a DPDCH: Dedicated Physical Data CHannel) which a mobile station transmits at an arbitrary timing and which a base station needs to always receive is defined.
Furthermore, a pilot signal for holding a radio link and a physical control channel (a DPCCH: Dedicated Physical Control CHannel) for transmitting physical layer control information, such as control information for DPDCH, are further defined.
In accordance with the release 1999, also in a case in which there are no transmission data and no data channel DPDCH is transmitted, a control channel (DPCCH) is transmitted continuously.
After the release 1999, in the releases 5 and 6, extended specifications for packet transmission (HSDPA and E-DCH) are introduced, and a case in which radio communications are carried out by using only a channel for packets without using a DPDCH which is a conventional channel for data is assumed.
In this case, except in a specific untransmission control mode which is called a "Compressed mode", a DPCCH has to be transmitted in order to perform closed loop transmit power control even if packets are not transmitted for a long time via an uplink (or a downlink).
When HSDPA is set up, the mobile station continues transmitting "downlink quality information (CQI) " via an uplink periodically in order to enable the fixed station to carry out transmission control (scheduling).
Because packets for data transmission have the property of being transmitted and received burstily, when there are many mobile stations which do not transmit and receive any data, regular DPCCH transmission and periodic CQI from such a mobile station causes consumption of the uplink radio resources.
Therefore, depending upon the number of mobile stations in each of which a mode (which is called "CELL_DCHstate" in the W-CDMA) which enables communications of a large volume of data is set up, a situation in which the mobile station accommodating capacity of the base station is restricted occurs.
According to the specifications of the release 1999, switching to a different transmission mode (CELL_RACH state) can be carried out in order to support a case in which a small amount of data are transmitted and received. However, the switching has the drawback of requiring much time to switch between the modes.
In the following nonpatent reference 1, to solve this problem, various methods of reducing the consumption of the uplink radio resources which is caused by the uplink DPCCH transmission and the CQI transmission when performing communication settings using only an extended channel for packets are summarized as 3GPP technical report TR25.903.
More specifically, nonpatent reference 1 discloses the following technologies:

(1) a technology of adding a new DPCCH format so as to reduce the required transmit power of a DPCCH (see Chapter 4.1) ;
(2) a technology of carrying out untransmission (Gating) of an uplink DPCCH periodically;
(3) a technology of reducing the transmit power (a target SIR) of the uplink DPCCH; and
(4) a technology of reducing the CQI transmission.

The following patent references 1 and 2 disclose methods of reducing the consumption of the radio resources which is caused by CQI transmission.
More specifically, patent reference 1 discloses a method of, when a mobile station sets up an uplink quality control channel, carrying out control of a start or stop of transmission of quality information.

Patent reference 2 discloses a method of switching the feedback frequency of transmission of downlink quality information (CQ) from a mobile station between a high-speed one and a low-speed one according to the state of downlink transmission of packets.

[Nonpatent reference 1] 3GPP TSG RAN WG1 #43 meeting, Seoul, Korea, November 7th to 11th, 2005, R1-051617, Agenda Item: 11, Continuous Connectivity for Packet Data Users, Source: Siemens, Title: TR 25.903 v0.2.0 "Continuous Connectivity for Packet Data Users" 「3GPP TR25.903v0.2.0(2005-11): Continuous Connectivity for Packet Data Users" (Release7)」, URL: http: //www. 3gpp.org/ftp/tsg_ ran/WG1_RL1/TSGR1_ 43/Docs/R1-05 1617.zip

[Patent reference 1] JP,2003-199173,A

[Patent reference 2] US2003/00876058A1 "VARIABLE RATE CHANNEL QUALITY FEEDBACK IN A WIRELESS COMMUNICATION SYSTEM", Lucent Technologies Inc.

Because the conventional radio communications systems are constructed as mentioned above, a problem with the conventional radio communications systems is that when transmitting data by using only a channel exclusively used for packet, if there exists a physical control channel which is transmitted continuously, a mobile station which does not contribute to the data transmission consumes the uplink radio resources wastefully.

Although above-mentioned nonpatent reference 1 and patent references 1 and 2 disclose the methods of reducing the consumption of the uplink radio resources, they do not disclose any detailed operation specifications, any implementation methods, and so on, and therefore the wasteful consumption of the uplink radio resources cannot be avoided actually.

In a W-CDMA communications system, when no uplink DPDCH is transmitted (when any uplink DPDCH is not set up, or when any setting of an uplink DPDCH cannot be made as the capability of the mobile station), because dummy data need to be transmitted in order to carry out continuous transmission while it is not necessary to transmit control information for DPDCH by using a DPCCH, the radio resources are consumed wastefully.

The present invention is made in order to solve the above-mentioned problems, and it is therefore an object of the present invention to provide a mobile station, a fixed station, and a radio communications system which can avoid wasteful consumption of uplink radio resources even when there exists a mobile station which does not contribute to transmission of packet data.

Disclosure of the Invention

A mobile station in accordance with the present invention includes a control channel processing means for setting up a transmission mode of a channel for transmit power control according to a transmission status of a channel exclusively used for packet which is monitored by a transmission status monitor means, and multiplies the channel for transmit power control by a channel coefficient corresponding to the transmission mode set up by the control channel processing means and then multiplexes the channel for transmit power control multiplied by the channel coefficient and the channel exclusively used for packet.

As a result, in a case in which no channel exclusively used for packet is transmitted, because the channel for transmit power control can be prevented from being transmitted, the present invention offers an advantage of being able to avoid wasteful consumption of the uplink radio resources.

Brief Description of the Figures

[Fig. 1] Fig. 1 is a block diagram showing a radio communications system in accordance with Embodiment 1 of the present invention;

[Fig. 2] Fig. 2 is a block diagram showing a fixed station (a base station 2 and a base station control apparatus 3) in accordance with Embodiment 1 of the present invention;

[Fig. 3] Fig. 3 is a block diagram showing a mobile station 1 in accordance with Embodiment 1 of the present invention;

[Fig. 4] Fig. 4 is a block diagram showing the interior of a multiplexing unit 36 of the mobile station 1;

[Fig. 5] Fig. 5 is a block diagram showing the interior of a spreading unit 51a of the mobile station 1;

[Fig. 6] Fig. 6 is a block diagram showing the interior of a spreading unit 51b of the mobile station 1;

[Fig. 7] Fig. 7 is a block diagram showing the interior of a spreading unit 51c of the mobile station 1;

[Fig. 8] Fig. 8 is an explanatory drawing showing an example of a definition of a second channel amplitude coefficient $A_{cc}$ which is additionally defined in this Embodiment 1;

[Fig. 9] Fig. 9 is a block diagram showing the interior of a spreading unit 51a of the mobile station 1;

[Fig. 10] Fig. 10 is an explanatory drawing showing a transmission timing of a DPCCH in a radio communications system in accordance with Embodiment 2 of the present invention;

[Fig. 11] Fig. 11 is an explanatory drawing showing a transmission timing of a DPCCH in the radio communications system in accordance with Embodiment 2 of the present invention;

[Fig. 12] Fig. 12 is an explanatory drawing showing an example of a transmission status of an uplink DPCCH (a UL-DPCCH) and uplink channels (E-DPDCH/E-DPCCH) for E-DCH;

[Fig. 13] Fig. 13 is an explanatory drawing showing an example of a transmission status of an uplink DPCCH (a UL-DPCCH) and uplink channels (E-DPDCH/E-DPCCH) for E-DCH;

[Fig. 14] Fig. 14 is an explanatory drawing showing DPCCH transmission of a radio communications system in accordance with Embodiment 4 of the present invention;

[Fig. 15] Fig. 15 is an explanatory drawing showing an example of a transmission timing of a UL-DPCCH shown in Fig. 14;

[Fig. 16] Fig. 16 is an explanatory drawing showing DPCCH transmission of the radio communications system in accordance with Embodiment 4 of the present invention;

[Fig. 17] Fig. 17 is a block diagram showing the interior of a spreading unit 51a of a mobile station 1;

[Fig. 18] Fig. 18 is an explanatory drawing showing a correspondence between a related art DPCCH format (number) and a format for E-DPCCH (number); and

[Fig. 19] Fig. 19 is an explanatory drawing showing a transmission timing of a DPCCH in a radio communications system in accordance with Embodiment 6 of the present invention.

Preferred Embodiments of the Invention

Hereafter, in order to explain this invention in greater detail, the preferred embodiments of the present invention will be described with reference to the accompanying drawings.

Embodiment 1.

In accordance with this Embodiment 1, a transmission control method of controlling transmission of a control channel is defined in detail according to a transmission status (a state or a mode) of a channel for packet transmission. As a result, the operations of mobile stations are unified.

In a communications system which uses a W-CDMA method, when transmission and reception of data are carried out using channels exclusively used for packet (used for HSDPA and for E-DCH), and conventional channels (a DCH and a DPDCH) are not transmitted as a real transmission time (or a transmission channel setting) or the transmission capacity of a mobile station, transmit power control is performed on an uplink control channel (particularly, a control channel DPCCH) in a physical layer.

Furthermore, the DPCCH is multiplied by a coefficient for channel transmit power control before the DPCCH is multiplexed with another channel.

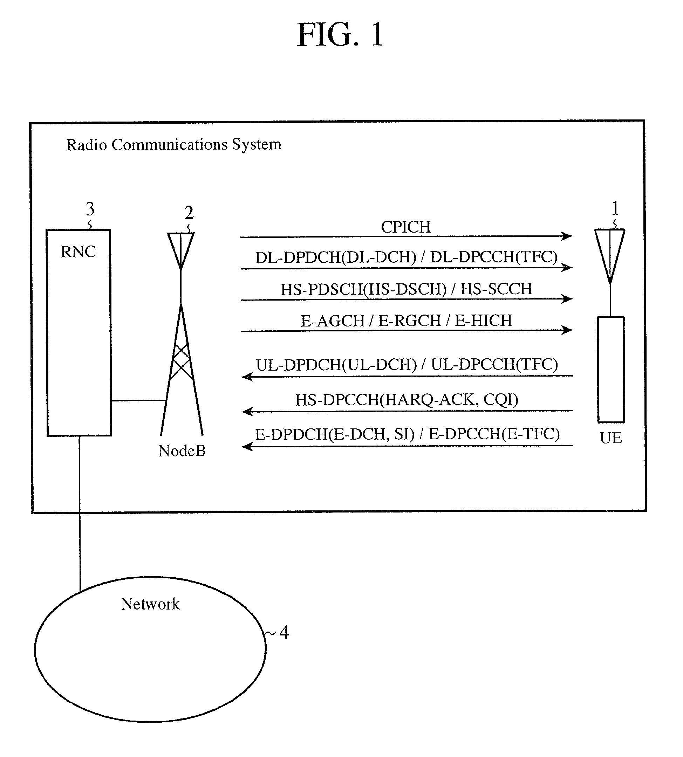

Fig. 1 is a block diagram showing a radio communications system in accordance with Embodiment 1 of the present invention, and, in the figure, the radio communications system is comprised of a mobile station 1, a base station 2, and a base station control apparatus 3. In Fig. 1, for the sake of simplicity, only one mobile station 1, only one base station 2, and only one base station control apparatus 3 are shown. As an alternative, two or more mobile stations 1, two or more base stations 2, or two or more base station control apparatuses 3 can be disposed.

A base station 2 covers a predetermined communication range which is generally called a sector or a cell, and communicates with a plurality of mobile stations 1. More specifically, a base station 2 and a mobile station 1 carry out radio communications using one or more radio links (or one or more radio channels).

A base station control apparatus 3 communicates with one or more base stations 2 and one or more mobile stations 1 and also manages the radio resources of the radio communications system.

A base station control apparatus 3 is connected to an exterior communication network 4, such as a public telephone network or the Internet, and relays data communications between a mobile station 1 and a base station 2, and the network 4.

In the W-CDMA method, a mobile station 1 is called UE (User Equipment), a base station 2 is called NodeB, and a base station control apparatus 3 is called RNC (Radio Network Controller) .

A base station 2 and a base station control apparatus 3 constructs a fixed station.

In the various drawings of the present invention, elements related to the explanation of the present invention are listed in a general form. In an actual radio communications system, according to (1) the capabilities of a mobile station and a fixed station, (2) communication services, (3) qualities of service (QoS), (4) radio communications settings, (5) the corresponding standard release number, and so on, a required intra-apparatus configuration and a required channel setting are implemented (set up).

Various channels related to Embodiment 1 of the present invention are as follows.

A CPICH is a common pilot channel (Common Pilot CHannel). This channel includes a common pilot signal which a mobile station 1 uses for detection of a base station 2 and detection and synchronization of transmission and reception timing.

A DL-DCH is a dedicated channel (DownLink-Dedicated Dada CHannel) used for transmitting transmission data for downlink from a transport layer which is a higher-level protocol layer of a fixed station to a physical layer which is a lower-level protocol layer of the fixed station.

A DL-DPDCH is a dedicated channel for physical layer data for downlink (DownLink-Dedicated Physical Dada CHannel).

This channel is the one onto which a DL-DCH signal is piggybacked.

A DL-DPCCH is a dedicated channel for physical layer control for downlink (DownLink-Dedicated Physical Control CHannel). This channel is the one onto which control information about a dedicated physical layer channel (for example, a pilot signal or transmit power control information (TPC)), information (TFC) about the type of modulation of DL-DPDCH data, or the like is piggybacked.

An HS-DSCH is a downlink high speed shared channel (High Speed-Downlink Shared CHannel) used for transmitting transmission data for downlink from a transport layer which is a higher-level protocol layer of a fixed station to a physical layer who is a lower-level protocol layer of the fixed station.

An HS-PDSCH is a physical layer shared channel (High Speed-Physical Downlink Shared CHannel) onto which HS-DSCH data are piggybacked.

An HS-SCCH is a shared channel (High Speed-Shared Control CHannel) onto which information about the type of modulation of HS-PDSCH data is piggybacked.

E-AGCH/E-RGCH are channels used for notifying scheduling results for E-DCH. As forms of expression of the results of assignment of the radio resources, speed information (for example, E-TFC, a maximum transmission rate setting), and power information (for example, maximum transmit power and a ratio of the maximum transmit power) and channel amplitude information (for example, a channel amplitude coefficient and a ratio of the channel amplitude coefficient) are mentioned. Because the forms of expression of the results of assignment of the radio resources are unrelated to the features of the present invention, the explanation of the forms will be omitted hereafter.

A E-HICH is a channel via which a base station 2 notifies to the mobile station 1 the reception judgment result (ACK or NACK) showing the result of judgment of reception of E-DCH packet data transmitted from a mobile station 1.

A UL-DCH is a dedicated data channel (DCH) for uplink, and is the same as the above-mentioned DL-DCH.

A UL-DPDCH is a dedicated physical layer data channel (DPDCH) for uplink, and is the same as the above-mentioned DL-DPDCH.

A UL-DPCCH is an uplink dedicated physical layer control channel (DPCCH), and is the same as the above-mentioned DL-DPCCH.

An HS-DPCCH is a physical layer control channel (High Speed-Dedicated Physical Control CHannel) which a specific mobile station 1 uses to transmit both the reception judgment result (ACK or NACK, and ACK and NACK are referred to as HARQ-ACK together from here on) of reception of HS-DSCH data transmitted from a base station 2, and downlink quality information (CQI: Channel Quality Indicator) to the base station with time division multiplexing.

A E-DPDCH is a dedicated physical layer channel onto which a E-DCH is piggybacked.

A E-DPCCH is a dedicated physical layer control channel onto which information about the type of modulation of E-DCH data is piggybacked.

The DL-DCH, the DL-DPDCH, and the DL-DPCCH, and the UL-DCH, the UL-DPDCH, and the UL-DPCCH are the channels defined by the release 1999 having early standard specifications.

The HS-DSCH, the HS-PDSCH, the HS-SCCH, and the HS-DPCCH are the channels for HSDPA which are newly added by the release 5.

The E-AGCH, the E-RGCH, the E-HICH, the E-DPDCH, and the E-DPCCH are the channels for E-DCH which are newly added by the release 6.

By using a DL-DPCCH and a UL-DPCCH, synchronous control of the transmission and reception timing between a specific mobile station 1 and a base station 2, control of transmit power for transmission between them, and so on are carried out, and a physical radio link during communications is maintained.

Fundamentally, a UL-DPCCH is transmitted continuously in a transmitting operation according to the specifications earlier than the release 5.

A state in which data are transmitted and received by using a DCH, an HS-DSCH, a E-DCH, or the like is called a CELL_DCH state (mode).

In a stage preceding transmission and reception of data, a channel (a RACH, a FACH, or the like) which complies with the conventional releases for which any explanation is omitted in the present invention may be used for transmission and reception of control information for transmission and reception settings or transmission and reception of a small amount of data. This state is called a CELL_RACH state.

Control of switching between the CELL_DCH state and the CELL_RACH state is carried out by a fixed station side.

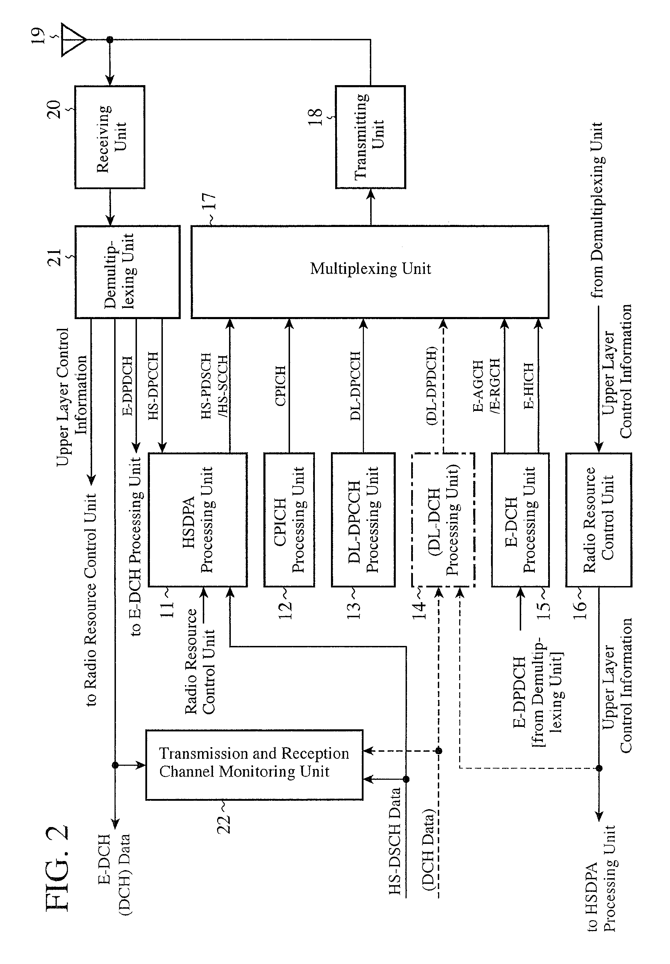

Fig. 2 is a block diagram showing a fixed station (a base station 2 and a base station control apparatus 3) in accordance with Embodiment 1 of the present invention.

Hereafter, the internal structure of the fixed station (functional blocks and a flow of data and control signals) will be explained with reference to Fig. 2.

In accordance with the W-CDMA standard, the fixed station is called UTRAN (Universal Terrestrial Radio Access Network) with the combination of the base station 2 and the base station control apparatus 3.

Each block in the fixed station shows a logical functional unit (entity) and can be disposed in either one of the base station 2 and the base station control apparatus 3 which construct the fixed station depending on an actual implementation example of the base station and the base station control apparatus, or can be disposed in a separate apparatus which is independent of the base station 2 and the base station control apparatus 3.

Because the present invention is made to reduce the interference caused by transmission of an uplink channel, and the explanation of an operation about downlinks will be limited to an extent necessary for the explanation of Embodiment 1 and the details of the explanation will not be limited.

Furthermore, as the capability of a fixed station, there can be provided a communication service setting and a transmission timing with which a DCH (DPDCH) is set up, transmission can be carried out while no DCH (DPDCH) is set up, or any transmission is not carried out. Therefore, in Fig. 2, a general configuration including an operation related to a DCH (DPDCH) is shown.

When not setting up a DCH (DPDCH) or not transmitting any DCH (DPDCH), or when that any DCH (DPDCH) cannot be used is set as the capability of the fixed station, it is assumed that no block related to a DCH (DPDCH) exists or related processes are not carried out. In Fig. 2, each of these related processes is designated by a parenthesis (· · ·) or a dotted line.

An HSDPA processing unit 11 receives HS-DSCH data and upper layer control information outputted from a radio resource control unit 16, and forms HS-PDSCH/HS-SCCH signals and outputs various pieces of transmission control information (various pieces of information, such as channel transmit power control information, which are not shown) to a multiplexing unit 17.

A CPICH processing unit 12 outputs a pilot channel signal and various pieces of transmission control information for CPICH transmission control (various pieces of information, such as channel transmit power control information, which are not shown) to the multiplexing unit 17.

A DL-DPCCH processing unit 13 forms a downlink DPCCH signal (DL-DPCCH), and also outputs various pieces of transmission control information used for transmitting the downlink DPCCH signal (various pieces of information, such as channel transmit power control information, which are not shown) to the multiplexing unit 17.

A DL-DCH processing unit 14 receives DCH data which are to be transmitted via a downlink, forms a downlink DPDCH signal, and also outputs various pieces of transmission control information used for transmitting the downlink DPCCH signal (various pieces of information, such as channel transmit power control information, which are not shown) to the multiplexing unit 17.

A E-DCH processing unit 15 receives a E-DPDCH signal outputted from a demultiplexing unit 21, forms a E-HICH signal from the result of judgment of reception of E-DCH packet data, and also outputs various pieces of transmission control information used for transmitting the E-HICH signal (various pieces of information, such as channel transmit power control information, which are not shown) to the multiplexing unit 17. The E-DCH processing unit 15 further carries out assignment (so-called scheduling) of the radio resources for transmitting an uplink E-DCH signal, and forms E-AGCH/E-RGCH channels from the result of the assignment and outputs the channels to the multiplexing unit 17. The E-HICH process and the E-AGCH/E-RGCH process are carried out in parallel. However, because the processes are not directly related to the essential features of the present invention, the explanation of the processes will be omitted properly.

When the E-DCH processing unit 15 receives the E-DPDCH signal, the E-DCH processing unit forms E-AGCH/E-RGCH signals from the results (so-called scheduling results) which it obtains by performing a E-DCH transmission control process, and outputs the E-AGCH/E-RGCH signals, as well as the various pieces of transmission control information (the various pieces of information, such as the channel transmit power control information, which are not shown), to the multiplexing unit 17. However, because the explanation of the present invention is no need of the explanation of the details of this processing, the explanation of the details of this processing will be omitted hereafter.

The radio resource control unit 16 controls each unit in the fixed station side in order to control various settings including a combination of channels required for the transmission and reception with the mobile station 1 and the transmission rate. The radio resource control unit 16 also outputs and inputs various pieces of control information about the higher-level protocol layer. The pieces of control information about the higher-level layer include the amplitude coefficient setting, transmission timing setting, and communication speed settings (TFC and E-TFC) of each channel, and so on.

The pieces of control information about the higher-level layer, such as the above-mentioned various pieces of setting information, are transmitted from the base station control apparatus 3, via the base station 2, to the radio resource control unit 35 of the mobile station 1 in an initial stage after the communications are started or during the communications.

In accordance with the W-CDMA method, upper layer control information which is transmitted to the mobile station 1 or is received from the mobile station 1 is called RRC_signalling.

An exchange of information (RRC signalling) between the radio resource control unit 16 of the fixed station and the radio resource control unit 35 of the mobile station 1 is carried out via FACH/RACH (not shown) when no DPDCH is set up in the initial stage after the communications are started, whereas when no DCH (no DPDCH) is set up during the communications, an exchange of information (RRC signalling) between them is carried out via the HS-PDSCH (downlink) and the E-PDPDCH (uplink).

In this Embodiment 1, only the operation of the system during the communications will be explained, and it is assumed that no DCH (no DPDCH) is set up or no DCH is transmitted. However, in order to generally explain the operation of the system including a conventional use of the system, a process of transmitting a DCH (DPDCH) will be mentioned hereafter.

The multiplexing unit 17 multiplexes the various downlink channels (the HS-PDSCH signal, the HS-SCCH signal, the CPICH signal, the DL-DPCCH signal, the DL-DPDCH signal, the E-AGCH/E-RGCH signals, and the E-HICH signal) into a multiplexed signal, and outputs the multiplexed signal to a transmitting unit 18. The details of the operation of the multiplexing unit 17 will be omitted hereafter.

The transmitting unit 18 converts the multiplexed signal outputted from the multiplexing unit 17 into a signal having transmit power and a transmit frequency which are required for radio transmission, and transmits a radio frequency signal which is the converted signal to the mobile station 1 via an antenna 19.

When the antenna 19 receives the radio frequency signal transmitted from the mobile station 1, the receiving unit 20 converts the radio frequency signal into a signal having received signal power and a reception frequency which can be processed by a demultiplexing unit 21. The converted signal may be called a baseband signal.

The demultiplexing unit 21 receives the baseband signal outputted from the receiving unit 20, and demultiplexes the baseband signal into data and control information about the various uplink channels. Because in this Embodiment 1, the system which uses the W-CDMA method is described, the demultiplexing unit carries out the demultiplexing by using a known de-spreading technology. From the demultiplexing unit 21, the pieces of upper layer control information are outputted to the radio resource control unit 16, the E-DCH data (DCH data) are outputted to the upper layer and a transmission and reception channel monitoring unit 22, the E-DPDCH signal is outputted to the E-DCH processing unit 15, and the HS-DPCCH signal is outputted to the HSDPA processing unit 11.

The transmission and reception channel monitoring unit 22 receives the downlink HS-DSCH data (DCH data) transmitted from the base station 2 to the mobile station 1, and the E-DCH data (DCH data) transmitted from the mobile station 1, and monitors the transmission and reception status of data via each of the channels. The transmission and reception channel monitoring unit 22 exchanges the various pieces of control information (not shown) with each block included in the fixed station according to both the transmission and reception status of data via each of the channels, and the transmission and reception state (i.e., the transmission and reception setting mode) of data via each of the channels.

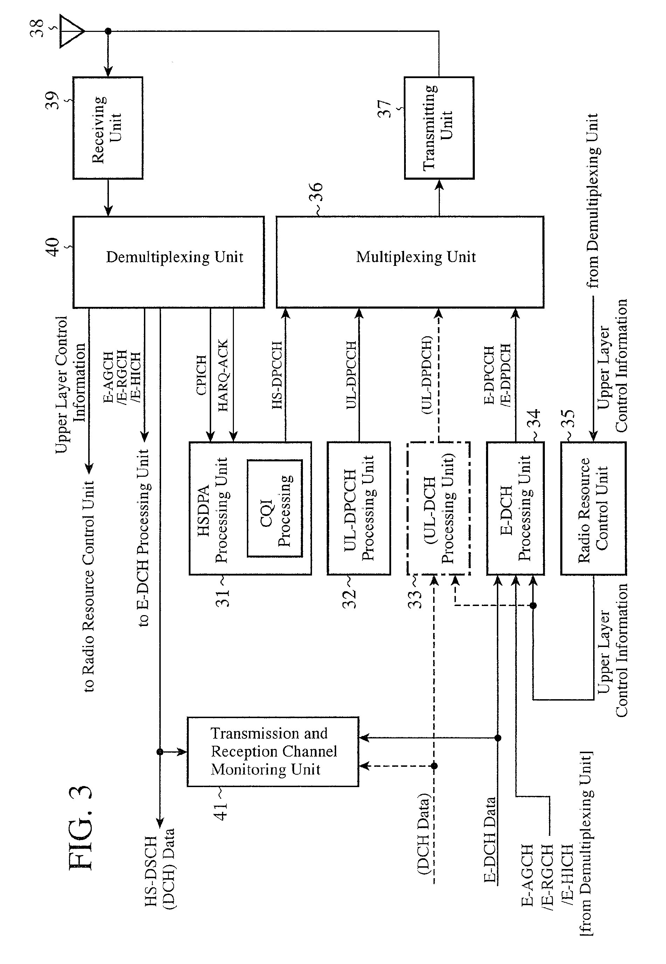

Fig. 3 is a block diagram showing the mobile station 1 in accordance with Embodiment 1 of the present invention. Hereafter, the internal structure of the mobile station (functional blocks and a flow of data and control signals) will be explained with reference to Fig. 3.

In the block diagram of the fixed station of Fig. 2, and in the block diagram of the mobile station 1 of Fig. 3, like names are used to identify components having like functions.

An HSDPA processing unit 31 receives the CPICH signal and the HARQ-ACK information included in the HS-DPCCH signal from a demultiplexing unit 40. The HSDPA processing unit 31 also generates downlink quality information (CQI) on the basis of the CPICH signal and multiplexes the downlink quality information (CQI) and the HARQ-ACK information to form an HS-DPCCH signal, and further outputs various pieces of transmission control information (various pieces of information, such as channel transmit power control information, which are not shown) used for transmitting the HS-DPCCH to a multiplexing unit 36.

A UL-DPCCH processing unit 32 forms an uplink DPCCH signal (UL-DPCCH), and also outputs various pieces of transmission control information (various pieces of information, such as channel transmit power control information, which are not shown) used for transmitting the uplink DPCCH signal to the multiplexing unit 36. The UL-DPCCH processing unit 32 constructs a control channel processing means.

The UL-DCH processing unit 33 receives DCH data which are to be transmitted via uplink and forms an uplink DPDCH signal (UL-DPDCH), and further outputs various pieces of transmission control information (various pieces of information, such as channel transmit power control information, which are not shown) used for transmitting the uplink DPCCH signal to the multiplexing unit 36.

The E-DCH processing unit 34 receives either the E-DCH data or the upper layer control information outputted from the radio resource control unit 35, and also determines transmission form information (E-TFC) to form a E-DPDCH signal from the E-DCH data according to the transmission form information and further forms a E-DPCCH signal from the transmission form information (E-TFC). The E-DCH processing unit 34 also outputs various pieces of transmission control information (various pieces of information, such as channel transmit power control information, which are not shown) used for transmitting the E-DPDCH signal, the E-DPCCH signal, and the E-DCH signal to the multiplexing unit 36. The E-DCH processing unit 34 further receives the E-AGCH/E-RGCH signals transmitted from the fixed station, and controls the transmission of the E-DCH packet data on the basis of the result included in the E-AGCH/E-RGCH signals. The E-DCH processing unit 34 further performs control of retransmission of the E-DCH data on the basis of the result of judgment of reception of packets included in the E-HICH signal.

The radio resource control unit 35 controls each unit in the mobile station 1 in order to control various settings, such as the combination of channels required for the transmission and reception with the fixed station, and the transmission rate. The radio resource control unit 35 also outputs and inputs various pieces of control information about the higher-level protocol layer. The pieces of control information about the higher-level layer include the amplitude coefficient setting, transmission timing setting, and communication speed settings (TFC and E-TFC) of each channel, and so on.

The pieces of control information about the higher-level layer, such as the above-mentioned various pieces of setting information, are transmitted from the base station control apparatus 3, via the base station 2, to the radio resource control unit 35 of the mobile station 1 in the initial stage after the communications are started or during the communications.

In accordance with the W-CDMA method, upper layer control information which is transmitted to the fixed station or is received from the fixed station is called RRC_signalling.

An exchange of information (RRC signalling) between the radio resource control unit 16 of the fixed station and the radio resource control unit 35 of the mobile station 1 is carried out via FACH/RACH (not shown) when no DPDCH is set up in the initial stage after the communications are started, whereas when no DCH (no DPDCH) is set up even during the communications, an exchange of information (RRC signalling) between them is carried out via the HS-PDSCH (downlink) and the E-PDPDCH (uplink).

In this Embodiment 1, only the operation of the system during the communications will be explained, and it is assumed that no DPDCH is set up or no DPDCH is transmitted.

The multiplexing unit 36 multiplexes the signals associated with the various uplink channels (HS-DPCCH, UL-DPCCH (UL-DPDCH), E-DPDCH, and E-DPCCH) into a multiplexed signal, and outputs the multiplexed signal to a transmitting unit 37. The multiplexing unit 36 constructs a multiplexing means.

The transmitting unit 37 converts the multiplexed signal outputted from the multiplexing unit 36 into a signal having transmit power and a transmit frequency which are required for radio transmission, and transmits a radio frequency signal which is the converted signal to the fixed station via an antenna 38. The transmitting unit 37 and the antenna 38 construct a transmitting means.

When the antenna 38 receives the radio frequency signal transmitted from the fixed station, a receiving unit 39 converts the radio frequency signal into a signal having received signal power and a reception frequency which can be processed by the demultiplexing unit 40. The converted signal may be called a baseband signal.

The demultiplexing unit 40 receives the baseband signal outputted from the receiving unit 39, and demultiplexes the baseband signal into the various channels, the data, and the control information which are included in the downlink. Because in this Embodiment 1, the system which uses the W-CDMA method is described, the demultiplexing unit carries out the demultiplexing by using a known de-spreading technology.

From the demultiplexing unit 40, the pieces of upper layer control information are outputted to the radio resource control unit 35, the E-AGCH/E-RGCH/E-HICH signals are outputted to the E-DCH processing unit 34, the HSDPA received data are outputted to the upper layer and the transmission and reception channel monitoring unit 41, and the CPICH signal and the HARQ-ACK information are outputted to the HSDPA processing unit 31.

The transmission and reception channel monitoring unit 41 receives the downlink HS-DSCH data (DCH data) transmitted from the base station 2 to the mobile station 1 and the E-DCH data (DCH data) transmitted to the fixed station, and monitors the transmission and reception status of data via each of the channels. The transmission and reception channel monitoring unit 41 also exchanges the various pieces of control information (not shown) with each block included in the fixed station according to the transmission and reception status of data via each of the channels, and the transmission and reception state (i.e., the transmission and reception setting mode) of each of the channels. The transmission and reception channel monitoring unit 41 constructs a transmission status monitoring means.

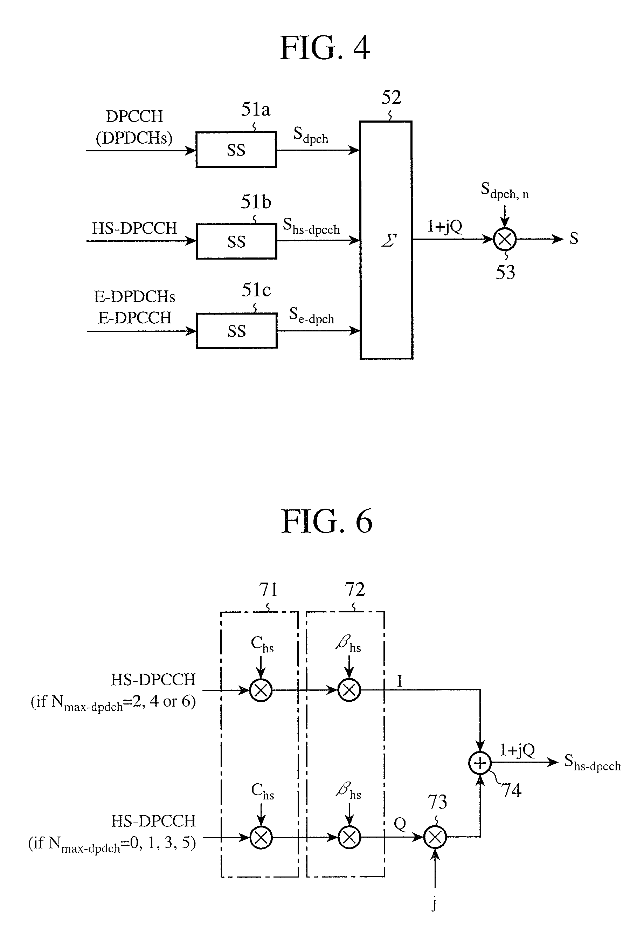

Fig. 4 is a block diagram showing the interior of the multiplexing unit 36 of the mobile station 1.

Hereafter, the internal structure of the multiplexing unit 36 (functional blocks and a flow of data and control signals) will be explained with reference to Fig. 4.

A spreading unit 51a of the multiplexing unit 36 receives the UL-DPCCH and the UL-DPDCH which are channels which comply with the release 1999 specifications, and performs a spectrum spreading process and a multiplexing process on the UL-DPCCH and the UL-DPDCH to output a complex signal $S_{dpch}$.

A spreading unit 51b of the multiplexing unit 36 receives the HS-DPCCH which is a channel which complies with the release 5 specifications, and performs a spectrum spreading process and a multiplexing process on the HS-DPCCH to output a complex signal $S_{hs-dpcch}$.

A spreading unit 51c of the multiplexing unit 36 receives the E-DPDCH/E-DPCCH which are the release 6 specifications, and performs a spectrum spreading process and a multiplexing process on the E-DPDCH/E-DPCCH to output a complex signal $S_{e-dpch}$.

When each of the spreading units 51a, 51b, and 51c carries out the multiplexing process, each of the spreading units 51a, 51b, and 51c performs a process (so-called mapping) of mapping each channel signal to both the I-axis and the Q-axis in a complex plane in order to convert each channel signal into a complex signal.

An adder unit 52 calculates the sum of the complex signals ($S_{dpch}$, $S_{hs-dpcch}$, and $S_{e-dpch}$) outputted from the spreading units 51a, 51b, and 51c to output a complex signal (I+jQ).

A multiplication unit 53 multiplies the complex signal (I+jQ) outputted from adder unit 52 by a code (in the W-CDMA method, a complex number code which is called a scramble code) $S_{dpch,n}$ for identifying each mobile station 1, and outputs a baseband signal S which is the complex signal multiplied by the code to the transmitting unit 37.

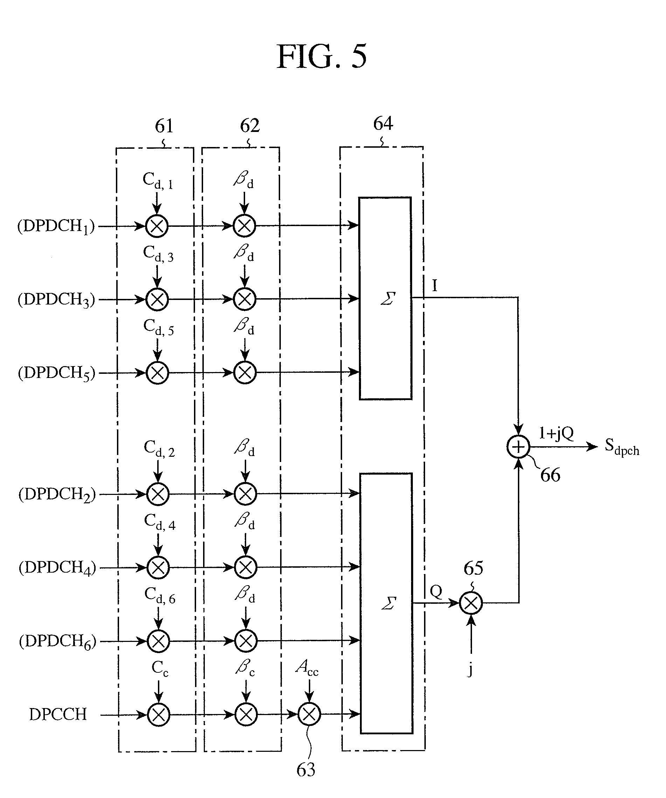

Fig. 5 is a block diagram showing the interior of the spreading unit 51a in the mobile station 1.

The spreading unit 51a performs a spreading process on the physical channels (the DPCCH and the DPDCH (a plurality of channels can be set up for the DPDCH)) corresponding to a data channel (DCH) defined by the release 1999. Any process associated with a DPDCH channel which is not set up is not carried out or is not implemented as the capability of the mobile station.

The spreading unit differs from that complies with the release 6 which is a conventional standard in that a multiplier 63 is added.

When a multiplier 61 of the spreading unit 51a receives the UL-DPCCHs and the UL-DPDCH which are channels which comply with the release 1999 specifications, the multiplier multiplies the UL-DPCCHs and the UL-DPDCH by channel separation codes ($C_{d,1}$ to $C_{d,6}$ and $C_c$), respectively, and outputs spread signals which are the results of the multiplications.

A multiplier 62 multiplies the spread signals outputted from the multiplier 61 by channel amplitude coefficients ($\beta_d$ and $\beta_c$ which are called gain factors in the W-CDMA method), and outputs the spread signals which are the results of the multiplications.

The multiplier 63 receives the spread signal DPCCH$\times C_c \times \beta_c$ among the spread signals outputted from the multiplier 62, and multiplies the spread signal by a second channel amplitude coefficient $A_{cc}$ which is a gain factor and outputs the spread signal which is the result of the multiplication.

After dividing the spread signals associated with the channels into a plurality of groups, an adder 64 calculates the sum of each group's spread signals and outputs each sum signal.

A multiplier 65 receives the sum signal of the group associated with the DPCCH, the $DPDCH_2$, the $DPDCH_4$, and the $DPDCH_6$, and multiplies the sum signal by an imaginary number (SQRT (-1)) in order to map the sum signal onto the Q-axis of the complex signal ($S_{dpch}$).

The multiplication process carried out by the multiplier 65 shows a block of the principle of an operation of mapping the output signal of the adder 64 (shown by Q in the figure) onto the Q-axis on a complex plane. Therefore, in the implementation of the mobile station 1, the multiplier does not need to be disposed as a real device.

Each of the I-axis and the Q-axis on a complex plane shows a relation (or a reference) between the relative phases of signal components in each axis, and does not show any absolute phase.

An adder 66 adds the output signal of the adder 64 (shown by I in the figure) and the output signal of the multiplier 65 to form a complex signal ($S_{dpch}$), and outputs the complex signal ($S_{dpch}$).

Fig. 6 is a block diagram showing the interior of the spreading unit 51b in the mobile station 1.

The spreading unit 51b performs a known spreading process on the physical channel (HS-DPCCH) used for HSDPA which is additionally defined by the release 5.

When a multiplier 71 of the spreading unit 51b receives the HS-DPCCH which is a channel which complies with the release 5 specifications, the multiplier multiplies the HS-DPCCH by a channel separation code ($C_{hs}$) and outputs the spread signal which is the result of the multiplication.

$N_{max-dpdch}$ shown in Fig. 6 is a maximum number of DPDCHs which is set up (set or configured) prior to or during communications.

In accordance with the W-CDMA method, this set number is derived on the basis of communication setting information which is called TFCS (Transport Format Conbination Set). For example, in a case of $N_{max-dpdch}$=1, only the DPDCH1 is set up, whereas in a case of $N_{max-dpdch}$=2, the DPDCH1 and the DPDCH2 are set up.

The same goes for a case of $N_{max-dpdch}$=3, 4, 5, or 6, and no process associated with any DPDCH which is not set up is carried out.

The HS-DPCCH is inputted to either of the two inputs of the multiplier 71 on the basis of the setting of $N_{max-dpdch}$. Furthermore, the case of $N_{max-dpdch}$=0 corresponds to the case (1) in which no DPDCH is transmitted, the case (2) in which any transmission setting about a DPDCH is not made, or the case (3) in which any DPDCH cannot be used as the transmission capability of the mobile station 1, and relates to the purpose of the present invention.

A multiplier 72 multiplies the spread signal outputted from the multiplier 71 by a channel amplitude coefficient ($\beta_{hs}$ which is called a gain factor in the W-CDMA method), and outputs the spread signal which is the result of the multiplication.

A multiplier 73 multiplies the spread signal outputted from the multiplier 72 (shown by Q in the figure) by an imaginary number (SQRT(-1)) in order to map the spread signal onto the Q-axis of the complex signal ($S_{hs-dpcch}$).

The multiplication process carried out by the multiplier 73 shows a block of the principle of an operation of mapping the output signal of the multiplier 72 (shown by Q in the figure) onto the Q-axis on a complex plane. Therefore, in the implementation of the mobile station 1, the multiplier does not need to be disposed as a real device.

Each of the I-axis and the Q-axis on a complex plane shows a relation (or a reference) between the relative phases of signal components in each axis, and does not show any absolute phase.

In this case, the same phase reference as that of I or Q which is the output signal of the adder 64 of Fig. 5 is used.

An adder 74 adds the output signal of the multiplier 72 (shown by I in the figure) and the output signal of the multiplier 73 to form a complex signal ($S_{hs-dpcch}$), and outputs the complex signal ($S_{hs-dpcch}$).

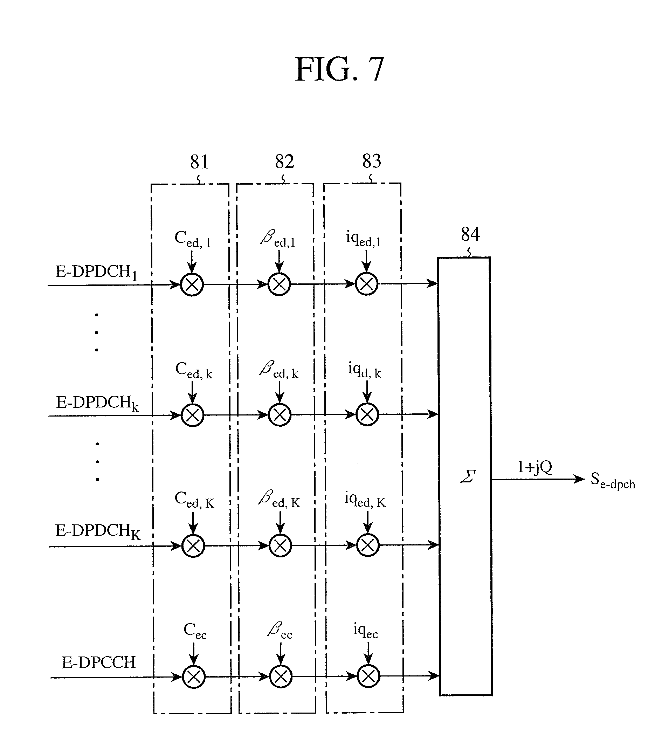

Fig. 7 is a block diagram showing the interior of the spreading unit 51c in the mobile station 1.

The spreading unit 51c performs a known spreading process on the physical channels (the E-DPCCH and the E-DPDCH (a plurality of channels can be set up for the E-DPDCH under the standard)) associated with a data channel (E-DCH) which is additionally defined by the release 6. In the case of the E-DPDCH, under the standard, there can be a case (1) in which a plurality of channels can be simultaneously transmitted, a case (2) in which a plurality of channels are set up, though only one channel is transmitted, or a case (3) in which no channel is set up as the capability of the mobile station, like in the case of the DPDCH. A general explanation will be made hereafter with reference to Fig. 7.

When a multiplier 81 of the spreading unit 51c receives the $E-DPCCH_1$ to the $E-DPDCH_K$ and the E-DPCCH which are channels which comply with the release 6 specifications, the multiplier 81 multiplies the E-DPCCH$_1$ to the E-DPDCH$_K$, and the E-DPCCH by channel separation codes (C$_{ed,1}$ to C$_{ed,K}$, and C$_{ec}$), respectively, and outputs spread signals which are the results of the multiplications. In accordance with the release 6 which is a conventional standard, K has a maximum of 4.

A multiplier 82 multiplies the spread signals outputted from the multiplier 81 by channel amplitude coefficients (β$_{ed,1}$ to β$_{ed,K}$, and β$_{ec}$), respectively, and outputs the spread signals which are the results of the multiplications.

A multiplier 83 multiplies the spread signals outputted from the multiplier 82 by coefficients (iq$_{ed,1}$ to iq$_{ed,K}$ and iq$_{ec}$) for mapping each of the spread signals onto the I-axis or the Q-axis of the complex signal (S$_{e-dpch}$), respectively, and outputs the spread signals which are the results of the multiplications. Each of the coefficients is 1 or SQRT(-1).

The multiplication process carried out by the multiplier 83 shows a block of the principle of an operation of mapping each of the output signals of the multiplier 82 onto the I-axis or the Q-axis on a complex plane. Therefore, in the implementation of the mobile station 1, the multiplier does not need to be disposed as a real device.

Each of the I-axis and the Q-axis on a complex plane shows a relation (or a reference) between the relative phases of signal components in each axis, and does not show any absolute phase. In this case, the same phase reference as that of the I-axis or the Q-axis shown in Figs. 5 and 6 is used.

An adder 84 calculates the sum of the output signals of the multiplier 83 to form a complex signal (S$_{e-dpch}$), and outputs the complex signal (S$_{e-dpch}$).

Next, the operation of the system will be explained.

Hereafter, the transmission and reception operation which is performed between the mobile station 1 and the fixed station will be explained. Particularly, an operating state of DCH untransmission (an untransmission setting or an untransmission mode) related to the problems to be solved by the present invention will be explained. DCH transmission may be used in order to transmit and receive upper layer control information in advance of setting of a communication channel for transmitting packet data.

In performing an operation which is related to channels for packets (an HS-DSCH and a E-DCH), only one of the channels may be set up, though it is assumed hereafter that a status in which both of the channels for packets are set up occurs.

Furthermore, in the following explanation, the explanation of a known art about the conventional standards (releases) is simplified to an extent required for the explanation of the present invention, and therefore the simplified explanation will be made hereafter.

(As to HSDPA)

HSDPA transmission packet data (in the figure, shown by HS-DSCH data) from the fixed station (the base station control apparatus 3 and the base station 2) are inputted to both the HSDPA processing unit 11 and the transmission and reception channel monitoring unit 22. When receiving the HS-DSCH data, the HSDPA processing unit 11 forms an HS-PDSCH signal from both the HS-DSCH data and the upper layer control information outputted from the radio resource control unit 16, and then outputs the HS-PDSCH signal to the multiplexing unit 17. There can be a case in which either the HS-DSCH data or the upper layer control information outputted from radio resource control unit 16 is outputted, or a case in which both of them are outputted.

At that time, information including the type of modulation of the HS-PDSCH serves as an HS-SCCH signal, and the HS-SCCH signal is also outputted to the multiplexing unit 17.

When receiving both the HS-PDSCH signal and the HS-SCCH signal from the HSDPA processing unit 11, the multiplexing unit 17 generates a multiplexed signal (the HS-PDSCH signal and the HS-SCCH signal) by performing a multiplexing and spectrum spreading process on both the HS-PDSCH signal and the HS-SCCH signal.

When receiving the multiplexed signal (the HS-PDSCH signal and the HS-SCCH signal) from the multiplexing unit 17, the transmitting unit 18 converts the multiplexed signal into a signal having transmit power and a transmit frequency which are required for radio transmission, and then transmits a radio frequency signal which is the converted signal to the mobile station 1 via the antenna 19.

When the antenna 38 receives the radio frequency signal transmitted from the fixed station, the receiving unit 39 of the mobile station 1 converts the radio frequency signal into a signal having received signal power and a reception frequency which can be processed by the demultiplexing unit 40, and then outputs a baseband signal (an HS-PDSCH signal and an HS-SCCH signal) which is the converted signal to the demultiplexing unit 40.

When receiving the baseband signal (the HS-PDSCH signal and the HS-SCCH signal) from the receiving unit 39, the demultiplexing unit 40 makes a judgment of the reception of the HS-PDSCH packet data, and then outputs the HA-DSCH data to both the higher-level protocol layer (not shown) and the transmission and reception channel monitoring unit 41.

The demultiplexing unit 40 also outputs the result (HARQ-ACK) of the judgment of the reception of the HS-PDSCH packet data to the HSDPA processing unit 31.

When receiving the result (HARQ-ACK) of the judgment of the reception of the HS-PDSCH packet data from the demultiplexing unit 40, the HSDPA processing unit 31 outputs, as an HS-DPCCH signal, the reception judgment result (HARQ-ACK) to the multiplexing unit 36.

The HSDPA processing unit 31 also determines downlink channel quality information (CQI) in a CQI processing block on the basis of a CPICH signal (which will be mentioned below) received by the receiving unit 39, and outputs, as an HS-DPCCH signal, the downlink channel quality information (CQI) to the multiplexing unit 36.

When receiving the HS-DPCCH signal from the HSDPA processing unit 31, the multiplexing unit 36 multiplexes the HS-DPCCH signal and other uplink channels into a multiplexed signal, and then outputs the multiplexed signal (the HS-DPCCH signal and the other uplink channels) to the transmitting unit 37.

When receiving the multiplexed signal (the HS-DPCCH signal and the other uplink channels) from the multiplexing unit 36, the transmitting unit 37 converts the multiplexed signal into a signal having transmit power and a transmit frequency which are required for radio transmission, and transmits a radio frequency signal which is the converted signal to the fixed station via the antenna 38.

(As to CPICH)

The CPICH processing unit 12 of the fixed station (the base station control apparatus 3 and the base station 2) outputs, as a CPICH signal, a common pilot to the multiplexing unit 17.

When receiving the CPICH signal from the CPICH processing unit 12, the multiplexing unit 17 multiplexes the CPICH signal and other downlink channels into a multiplexed signal, and then outputs the multiplexed signal (the CPICH signal and other downlink channels) to the transmitting unit 18.

When receiving the multiplexed signal (the CPICH signal and the other downlink channels) from the multiplexing unit 17, the transmitting unit 18 converts the multiplexed signal into a signal having transmit power and a transmit frequency which are required for radio transmission, and then transmits a radio frequency signal which is the converted signal to the mobile station 1 via the antenna 19.

When the antenna 38 receives the radio frequency signal transmitted from the fixed station, the receiving unit 39 of the mobile station 1 converts the radio frequency signal into a signal having received signal power and a reception frequency which can be processed by the demultiplexing unit 40, and then outputs a baseband signal (the CPICH signal and the other downlink channels) which is the converted signal to the demultiplexing unit 40.

When receiving the baseband signal (the CPICH signal and the other downlink channels) from the receiving unit 39, the demultiplexing unit 40 demultiplexes the baseband signal into the CPICH signal, and then outputs the CPICH signal to the HSDPA processing unit 31.

(As to DL-DPCCH)

The DL-DPCCH processing unit 13 of the fixed station (the base station control apparatus 3 and the base station 2) outputs, as a DL-DPCCH signal, the physical layer control information about each mobile station 1 to the multiplexing unit 17.

When receiving the DL-DPCCH signal from the DL-DPCCH processing unit 13, the multiplexing unit 17 multiplexes the DL-DPCCH signal and other downlink channels into a multiplexed signal, and then outputs the multiplexed signal (the DL-DPCCH signal and the other downlink channels) to the transmitting unit 18.

When receiving the multiplexed signal (the DL-DPCCH signal and the other downlink channels) from the multiplexing unit 17, the transmitting unit 18 converts the multiplexed signal into a signal having transmit power and a transmit frequency which are required for radio transmission, and then transmits a radio frequency signal which is the converted signal to the mobile station 1 via the antenna 19.

When the antenna 38 receives the radio frequency signal transmitted from the fixed station, the receiving unit 39 of the mobile station 1 converts the radio frequency signal into a signal having received signal power and a reception frequency which can be processed by the demultiplexing unit 40, and then outputs a baseband signal (the DL-DPCCH signal and the other downlink channels) which is the converted signal to the demultiplexing unit 40.

When receiving the baseband signal (the DL-DPCCH signal and the other downlink channels) from the receiving unit 39, the demultiplexing unit 40 demultiplexes the baseband signal into the DL-DPCCH signal, and then performs link holding (not shown), such as synchronization in a physical layer.

(As to E-DCH)

The E-DCH processing unit 15 of the fixed station (the base station control apparatus 3 and the base station 2) outputs, as E-AGCH/E-RGCH signals, packet data transmission permission information about the mobile station 1 to the multiplexing unit 17.

The E-DCH processing unit 15 also receives the E-DPDCH received from the mobile station 1, and, when transmission request information (SI: Schedule Information) is included in the E-DPDCH, uses the request to carry out determination of whether to permit transmission of packet data. When E-DCH data are included in the E-DPDCH, the E-DCH processing unit carries out a judgment of reception on the basis of the E-DPCCH received from the mobile station 1, and then outputs a E-HICH signal to the multiplexing unit 17.

When the multiplexing unit 17 receives the E-AGCH/E-RGCH/E-HICH signals from the E-DCH processing unit 15, the multiplexing unit multiplexes the E-AGCH/E-RGCH/E-HICH signals and other downlink channels into a multiplexed signal and then outputs the multiplexed signal (the E-AGCH/E-RGCH/E-HICH signals and the other downlink channels) to the transmitting unit 18.

When the transmitting unit 18 receives the multiplexed signal (the E-AGCH/E-RGCH/E-HICH signals and the other downlink channels) from the multiplexing unit 17, the transmitting unit converts the multiplexed signal into a signal having transmit power and a transmit frequency which are required for radio transmission, and transmits a radio frequency signal which is the converted signal to the mobile station 1 via the antenna 19.

When the antenna 38 receives the radio frequency signal transmitted from the fixed station, the receiving unit 39 of the mobile station 1 converts the radio frequency signal into a signal received signal power and a reception frequency which can be processed by then demultiplexing unit 40, and then outputs a baseband signal (the E-AGCH/E-RGCH/E-HICH signals and the other downlink channels) which is the converted signal to the demultiplexing unit 40.

When receiving the baseband signal (the E-AGCH/E-RGCH/E-HICH signals and the other downlink channels) from the receiving unit 39, the demultiplexing unit 40 demultiplexes the baseband signal into the signals about the channels and outputs them to the E-DCH processing unit 34.

The E-DCH processing unit 34 receives the E-DCH data and determines the transmission rate of the E-DCH data, and so on on the basis of the packet data transmission permission information included in the E-AGCH/E-RGCH signals outputted from the demultiplexing unit 40.

The E-DCH processing unit 34 also forms a E-DPDCH and a E-DPCCH on the basis of the transmission rate of the E-DCH data, and so on, and then outputs, as E-DPDCH/E-DPCCH signals, the E-DPDCH and the E-DPCCH to the multiplexing unit 36.

When receiving the E-DPDCH/E-DPCCH signals from the E-DCH processing unit 34, the multiplexing unit 36 multiplexes the E-DPDCH/E-DPCCH signals and other uplink channels into a multiplexed signal, and outputs the multiplexed signal (the E-DPDCH/E-DPCCH signals and the other uplink channels) to the transmitting unit 37.

When receiving the multiplexed signal (the E-DPDCH/E-DPCCH signals and the other uplink channels) from the multiplexing unit 36, the transmitting unit 37 converts the multiplexed signal into a signal having transmit power and a transmit frequency which are required for radio transmission, and transmits a radio frequency signal which is the converted signal to the fixed station via the antenna 38.

When the antenna 19 receives the radio frequency signal transmitted from the mobile station 1, the receiving unit 20 of the fixed station (the base station control apparatus 3 and the base station 2) converts the radio frequency signal into a signal having received signal power and a reception frequency which can be processed by the demultiplexing unit 21, and then outputs a baseband signal (the E-DPDCH/E-DPCCH signals and the other uplink channels) which is the converted signal to the demultiplexing unit 21.

When receiving the baseband signal (the E-DPDCH/E-DPCCH signals and the other uplink channels) from the receiving unit 20, the demultiplexing unit 21 demultiplexes the E-DPDCH signal into the E-DCH data, and then outputs the E-DCH data to both the higher-level protocol layer (not shown) and the transmission and reception channel monitoring unit 22.

The demultiplexing unit 21 also outputs the E-DPDCH signal to the E-DCH processing unit 15.

When receiving the E-DPDCH signal from the demultiplexing unit 21, the E-DCH processing unit 15, if a packet data transmission request (SI) is included in the E-DPDCH signal, uses it to carry out determination of the transmission permission information about packet data.

When E-DCH data are included in the E-DPDCH signal, the E-DCH processing unit 15 carries out a process of judging reception to form a E-HICH from the results of the judgment.

The above transmission and reception operations correspond to the processing according to the conventional release standards (releases).

Next, the operation of the multiplexing unit 36 of the mobile station 1 which is related to implementation of the present invention will be explained in detail.

Fig. 4 shows the internal structure of the multiplexing unit 36 of the mobile station 1, as mentioned above. Fig. 4 also shows a process about a DPDCH signal in order to show a general operating principle. However, in this Embodiment 1, assuming that the system is placed in a state in where no DPDCH is set up and no process about any DPDCH is carried out, the explanation about the process about a DPDCH signal will be omitted. By the way, an operation about DPDCH processing is the same as that based on the principle of operation according to a conventional standard (the release 6).

The DPCCH signal inputted to the multiplexing unit 36 of the mobile station 1 is inputted to the spreading unit 51a of the multiplexing unit 36.

When receiving the DPCCH signal, the spreading unit 51a of the multiplexing unit 36 performs a spectrum spreading process on the DPCCH signal, and then outputs a complex signal $S_{dpch}$ which is a spread signal to the adder unit 52.

Concretely, this processing is carried out as follows.

When receiving the DPCCH signal, the multiplier 61 of the spreading unit 51a multiplies the DPCCH signal by a channel separation code Cc and then output a spread signal $DPCCH \times C_c$ which is the result of the multiplication, as shown in Fig. 5.

When receiving the spread signal $DPCCH \times C_c$ from the multiplier 61, the multiplier 62 multiplies the spread signal by a first channel amplitude coefficient $\beta_c$ and then outputs the spread signal $DPCCH \times C_c \times \beta_c$ which is the result of the multiplication.

When receiving the spread signal $DPCCH \times C_c \times \beta_c$ from the multiplier 61, the multiplier 63 multiplies the spread signal by a second channel amplitude coefficient $A_{cc}$ and then outputs the spread signal DPCCH$\times C_c \times \beta_c \times A_{cc}$ which is the result of the multiplication before the spread signal is added to other channels by the adder 64.

The spread signal DPCCH$\times C_c \times \beta_c \times A_{cc}$ outputted from the multiplier 63 is multiplied by an imaginary number (SQRT(-1)) by the multiplier 65 after the spread signal is processed by the adder 64. As a result, the spread signal becomes a Q-axis signal component. However, the multiplication of the spread signal by the imaginary number does not need to exist actually.

Furthermore, the Q-axis signal component is outputted, as the Q-axis component of the complex signal $S_{dpch}$ (I+jQ), to the adder unit 52 by the adder 66.

The detailed principle of operation of the spreading unit 51a is the same as the principle of operation of the conventional standard (the release 6) except for the operation related to the multiplier 63.

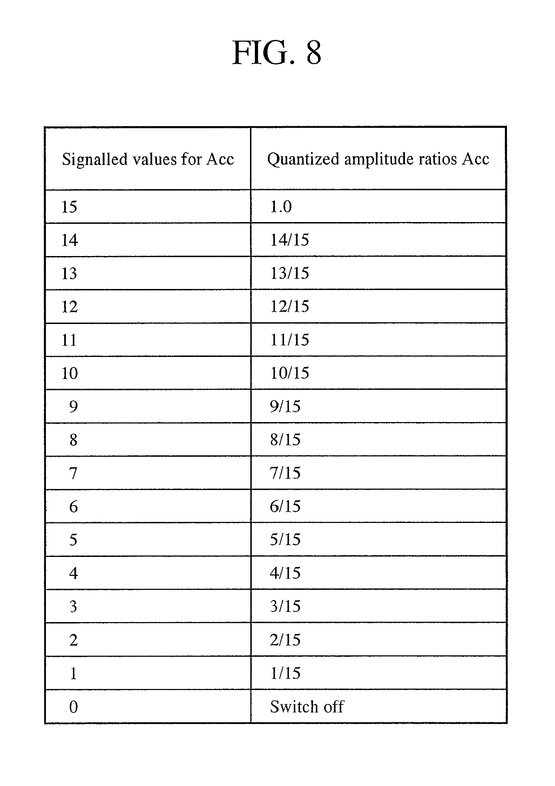

Fig. 8 shows an example of a definition of the second channel amplitude coefficient $A_{cc}$ which is additionally defined in this Embodiment 1.

In order to unify the operation of the mobile station in the communications system, it is necessary to define the value of the second channel amplitude coefficient $A_{cc}$ in the technical specifications, as shown in Fig. 8, and various defining methods including: (1) a method of determining (or selecting) the value of the second channel amplitude coefficient within the mobile station; and (2) a method of notifying, as upper layer control information, the value of the second channel amplitude coefficient to the mobile station 1, and then notifying the value of the second channel amplitude coefficient from the radio resource control unit 35 to the UL-DPCCH processing unit 32 can be provided.

When the value of the second channel amplitude coefficient is notified to the mobile station 1, a numeric value in "Signalled values" which is a left column of Fig. 8 is notified.

The HS-DPCCH signal inputted to the multiplexing unit 36 of the mobile station 1 is inputted to the spreading unit 51b of the multiplexing unit 36.

When receiving the HS-DPCCH signal, the spreading unit 51b of the multiplexing unit 36 performs the spectrum spreading process on the HS-DPCCH signal and then outputs a complex signal $S_{hs-dpcch}$ which is a spread signal to the adder unit 52.

Concretely, this processing is carried out as follows.

When receiving the HS-DPCCH signal, the multiplier 71 of the spreading unit 51b multiplies the HS-DPCCH signal by a channel separation code $C_{hs}$ and then outputs a spread signal HS-DPCCH$\times C_{hs}$ which is the result of the multiplication, as shown in Fig. 6.

When receiving the spread signal HS-DPCCH$\times C_{hs}$ from the multiplier 71, the multiplier 72 multiplies the spread signal by a channel amplitude coefficient $\beta_{hs}$ and then outputs a spread signal HS-DPCCH $\times C_{hs} \times \beta_{hs}$ which is the result of the multiplication.

The HS-DPCCH signal inputted to the spreading unit 51b is outputted, as either the I-axis component or the Q-axis component of the complex signal $S_{hs-dpcch}$, according to a maximum DPDCH parallel transmission set number ($N_{max-dpch}$) notified thereto, as an upper layer control coefficient, from the fixed station.

In this Embodiment 1, because no DPDCH is set up and $N_{max-dpch}=0$, a process related to the Q-axis component output is carried out.

The detailed principle of operation of the spreading unit 51b is the same as the principle of operation of the conventional standard (the release 6).

The E-DPDCH$_1$ to E-DPDCH$_K$ signals, and the E-DPCCH signal which are inputted to the multiplexing unit 36 of the mobile station 1 are inputted to the spreading unit 51c of the multiplexing unit 36.

When receiving the E-DPDCH$_1$ to E-DPDCH$_K$ signals and the E-DPCCH signal, the spreading unit 51c of the multiplexing unit 36 performs the spectrum spreading process on the E-DPDCH$_1$ to E-DPDCH$_K$ signals and the E-DPCCH signal and then outputs a complex signal $S_{e-dpch}$ which is a spread signal to the adder unit 52.

Concretely, this processing is carried out as follows.

When receiving the E-DPDCH$_1$ to E-DPDCH$_K$ signals and the E-DPCCH signal, the multiplier 81 of the spreading unit 51c multiplies the E-DPCCH$_1$ to E-DPDCH$_K$ signals and the E-DPCCH signal by channel separation codes ($C_{ed,1}$ to $C_{ed,K}$ and $C_{ec}$), respectively, and then outputs spread signals which are the results of the multiplications, as shown in Fig. 7.

When receiving the spread signals from the multiplier 81, the multiplier 82 multiplies the spread signals by channel amplitude coefficients ($\beta_{ed,1}$ to $\beta_{ed,K}$ and $\beta_{ec}$), respectively, and outputs the spread signals which are the results of the multiplications.

When receiving the spread signals from the multiplier 82, the multiplier 83 multiplies the spread signals outputted from the multiplier 82 by coefficients ($iq_{ed,1}$ to $iq_{ed,K}$ and $iq_{ec}$) for assigning each of the spread signals to the I-axis or the Q-axis of the complex signal ($S_{e-dpch}$), respectively, and outputs the spread signals which are the results of the multiplications.

The adder 84 calculates the sum of the output signals of the multiplier 83 so as to form a complex signal ($S_{e-dpch}$), and outputs the complex signal ($S_{e-dpch}$).

The detailed principle of operation of the spreading unit 51c is the same as the principle of operation of a conventional standard (the release 6).

Next, a control process of controlling transmission of the uplink DPCCH (UL-DPCCH) will be explained with reference to Figs. 5 and 8.

A definition of "Switch off" is provided as a setting of the second channel amplitude coefficient $A_{cc}$, as shown in Fig. 8, and the multiplier 63 of Fig. 5 multiplies the spread signal by the second channel amplitude coefficient $A_{cc}$.

Therefore, the uplink DPCCH discontinuous transmission (DPCCH Gating) described in, for example, section 4.2 of nonpatent reference 1 can be implemented by applying $A_{cc}=1.0$ of Fig. 8 and "Switch off."

On the other hand, the uplink DPCCH transmission output reduction (SIR_target reduction) described in section 4.3 of nonpatent reference 1 can be implemented by applying, for example, a region from $A_{cc}$=1.0 to 1/15.

Control of the timing of change in the coefficient value can be implemented by either controlling the output timing of the UL-DPCCH signal outputted from the UL-DPCCH processing unit 32 or notifying the control information (not shown) from the UL-DPCCH processing unit 32 to the multiplexing unit 36.

When using a parameter in the case in which the transmission control of the UL-DPCCH is carried out through the control of the timing of change in the $A_{cc}$ value, the parameter is notified to the UL-DPCCH processing unit 32 with a notification (referred to as primitive in the W-CDMA method) of the control information from the higher-level protocol layer.

The UL-DPCCH processing unit 32 controls either a transition between a DPCCH continuous transmission state (mode) and a discontinuous transmission state (mode) or a transition between a conventional transmit power state (mode) and a low transmit power state (mode) in cooperation with the transmission and reception status monitoring of uplink and downlink packets by the transmission and reception channel monitoring unit 41.

As a definition of both an expression of the packet transmission monitoring and the UL-DPCCH transmission control by the transmission and reception channel monitoring unit 41, one of various definitions including: (1) a definition made for each of uplink and downlink (for example, they are defined as UL-ACTIVE/DEACTIVE and DL-ACTIVE/DEACTIVE, respectively); and (2) a definition made for both the links (for example, they are defined as a Normal mode and a ConCon mode) can be provided.

In order to synchronize the DPCCH transmission state (mode) in the mobile station 1 and the DPCCH reception state (mode) in the fixed station, there can be provided one of various methods including: (1) a method of notifying state change information (trigger) explicitly; (2) a method of notifying the state change information (trigger) implicitly; and (3) a method of notifying the state change information using a combination of the above-mentioned methods (1) and (2).

Furthermore, there can be provided various methods including: (1) a method of allowing the fixed station to transmit the state change information (trigger) about downlink packet transmission; (2) a method of allowing the mobile station 1 to transmit the state change information (trigger) about uplink packets; (3) a method of allowing the fixed station to manage all of the state change information about downlink packet transmission and the state change information about uplink packets, and transmitting them; and (4) a method which is a combination of the above-mentioned methods (1) to (3).

As can be seen from the above description, in accordance with this Embodiment 1, when controlling the transmit power of an uplink control channel DPCCH by using a method, such as discontinuous transmission, before the DPCCH is multiplexed with other uplink channels, the DPCCH is independently multiplied by the coefficients $C_c$ and $\beta_c$ for transmit power control. Therefore, in a case in which no channel exclusively used for packet is transmitted (or no channel exclusively used for packet is received), the uplink control channel DPCCH can be prevented from being transmitted. As a result, this embodiment offers an advantage of being able to avoid wasteful consumption of the uplink radio resources.

More concretely, this embodiment can offer the following advantages.

(1) Because the DPCCH is independently multiplied by the additional channel coefficients in a stage preceding the spreading process and the multiplexing processing, the independent control of the DPCCH and the structure of the mobile station 1 can be prevented from becoming complicated.

(2) It is not necessary to change operations, such as the control of the amplitudes of channels for the DPCCH which comply with up to the conventional standard (the release 6), concretely the control of $\beta_c$, and the so-called backward compatibility can be ensured.

(3) According to the "Switch off" definition of the second channel amplitude coefficient $A_{cc}$ which is the additional channel coefficient, the system can also support "DPCCH Gating" suggested by TR25.903, and can control the uplink interference in the radio communications system with flexibility.

(4) When transmission of packet data is started or when transmission of packet data is restarted, the transmit power of the DPCCH can be easily returned to an operation which is conventionally defined.

(5) Because a quantized value (a discrete value) is applied as a conventional channel coefficient ($\beta_c$) value, the steps (granularity) of the transmit power are rough and therefore fine channel transmit power control, such as outerloop transmit power control (Outerloop Transmit Power Control: for example, control in units of 0.01dB) which is conventionally carried out by a base station, cannot be carried out. However, in accordance with this Embodiment 1, because the provision of the different coefficient multiplication process makes it possible for this embodiment to be applied also to reduction of the transmit power of the DPCCH and therefore the radio resource control becomes flexible, the uplink interference control can be carried out efficiently.

In this Embodiment 1, it is also possible to use, as the definition of the second channel amplitude coefficient $A_{cc}$ which is the additional channel coefficient, a specified value which is the same as the conventional

channel coefficient ($\beta_c$), and the same signaling definition as that of the conventional channel coefficient. In this case, the mobile station 1 does not need to hold the specified value or the table (table) separately, and therefore the structure of the mobile station does not become complicated. Furthermore, because the amount of increase in the exchange (the so-called overhead) of the upper layer control information which is carried out between the mobile station 1 and the fixed station is small, there is provided an advantage of suppressing the increase in the amount of uplink interference.

In addition, in the specification about control of maximum transmit power from the mobile station 1 in the conventional releases (the technical specification TS25.214), it is defined that the maximum of the total transmit power can be limited to a value smaller than the value which is determined by the mobile station capability (Power class), depending on the combination of channels which are simultaneously transmitted from the mobile station 1, the channel amplitude coefficient ($\beta$), the signal waveform characteristics, and so on. As an alternative, the maximum of the total transmit power and so on can be limited by $\beta_c \times A_{cc}$, instead of $\beta_c$, in such a way as to conform to this Embodiment 1.

In addition, in accordance with this Embodiment 1, the spreading unit 51a is formed as shown in Fig. 5, and the spectrum spreading process on the DPCCH by the multiplier 61, the conventional channel amplitude multiplication process by the multiplier 62, and the additional channel amplitude multiplication process by the multiplier 63 are arranged in series.

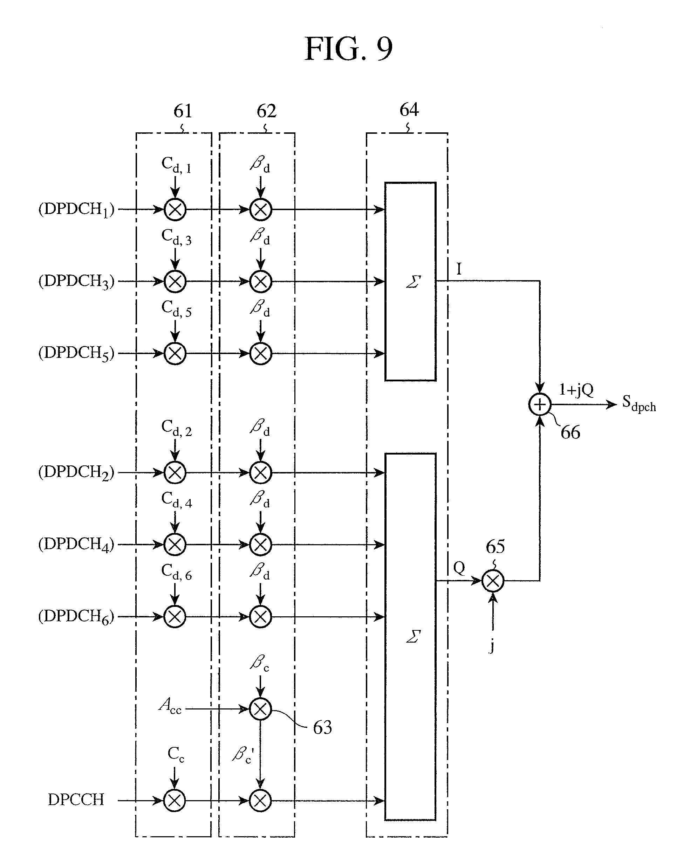

However, the structure of the spreading unit 51a is not limited to this one, and can be alternatively formed as shown in Fig. 9.

More specifically, the channel amplitude coefficient ($\beta_c$) in the multiplier 62 is replaced by $\beta_c$' in such a way that the multiplier 62 can include the multiplication process performed by the multiplier 63.

In this case, the multiplier 63 does not need to carry out the multiplication as an explicit multiplier, and the multiplication process can be included in the flow of the DPCCH channel amplitude process (see, for example, the W-CDMA technical specification TS25.214). Because the multiplication process can be implemented via software by defining it as a part of the specifications of the DPCCH channel amplitude process flow, there can be provided an advantage of preventing the circuit structure of the mobile station 1 from becoming complicated, thereby preventing the mobile station 1 from getting upsized.

Furthermore, in accordance with this Embodiment 1, the second channel amplitude coefficient $A_{cc}$ which is the additional channel coefficient is defined directly, and the spreading unit 51a carries out the multiplication process so as to control the transmit power, though an amount of power offset ($\Delta$DPCCH) to the transmit power of the DPDCH can be defined, like in the case of the HS-DPCCH or the like.

In this case, a value to be set up is notified, as upper layer control information, from the fixed station to the mobile station 1, and the second channel amplitude coefficient $A_{cc}$ is then determined.

As a method of calculating the second channel amplitude coefficient $A_{cc}$, the following various definition expressions including:

$$A_{cc}=\beta_c'/\beta_c,$$

and

$$A_{cc}=\exp(\Delta DPCCH/10)$$

can be used.

Furthermore, in a case in which the "$\beta_c$'" value or the "$\beta \times A_{cc}$" value is finally used, as the channel amplitude coefficient, for the transmit power control of the DPCCH, a quantized value can be used as the "$\beta_c$'" value or the "$\beta \times A_{cc}$" value, like in the case of conventional $\beta c$, or a non-quantized value can be used as the "$\beta c$'" value or the "$\beta \times A_{cc}$" value.

When a quantized value can be used as the "$\beta_c$'" value or the "$\beta \times A_{cc}$" value, various quantization processes including: (1) rounding off; (2) rounding; (3) rounding up; and (4) rounding down can be applied, one of the methods which is best suited for the radio communications system to which the one of the methods is applied is defined by the technical specifications, or which one of the methods is used is not defined by the technical specifications, but is left to the manufacturer of the mobile station 1 which implements the mobile station.

In addition, in this Embodiment 1 and in the embodiments which will be described below, the explanation about transmission of a downlink DPCCH (DL-DPCCH) will be omitted. As control of transmission of a DPCCH, the DPCCH can be transmitted in a DPCCH transmit format which is the same as that according to the conventional standard release 1999, or can be transmitted in a variant format (referred to as a Fractional DPCH) which is additionally defined by the release 6.

In this Embodiment 1, it is assumed that the variant format is used, like in the case of nonpatent reference 1, and the upper layer control information from the fixed station is transmitted to the mobile station 1 via the HS-DSCH.

Embodiment 2.

In accordance with above-mentioned Embodiment 1, before a DPCCH is multiplexed with other uplink channels, the DPCCH is independently multiplied by the coefficients $C_c$ and $\beta_c$ for transmit power control, as previously explained. In contrast, in accordance with this Embodiment 2, intervals at which a channel for transmit power control used for control of transmit power is to be transmitted is controlled according to the transmission status of a channel exclusively used for packet currently monitored by a transmission and reception channel monitoring unit 41, as will be explained below.

More specifically, in accordance with this Embodiment 2, a mobile station 1 which can discontinuously transmit an uplink DPCCH (UL-DPCCH), which, in a conventional art, can be transmitted continuously according to the transmission status of a channel exclusively used for packet, decreases or increases the degree (cycle) of the discontinuous transmission when switching between the continuous transmission operating state (mode) and the discontinuous transmitting operation state (mode).

More specifically, in a case in which no packet data transmission (or no packet data reception) via a packet channel is carried out (dependently upon the mobile station capability, the channel communication settings, the packet transmission state, etc.), when the UL-DPCCH is made to switch from the continuous transmission state to the discontinuous transmission state, the length of intervals at which the UL-DPCCH is to be transmitted is increased gradually. Control of the timing of the untransmission is carried out by changing the channel amplitude coefficient of the UL-DPCCH.

In accordance with this Embodiment 2, a receiving unit 20 of a fixed station constructs a receiving means, and a demultiplexing unit 21 constructs a demultiplexing means. A transmission and reception channel monitoring unit 22 of the fixed station constructs a reception mode setting means for setting up a reception mode for a channel for transmit power control from the receiving intervals of the channel for transmit power control.

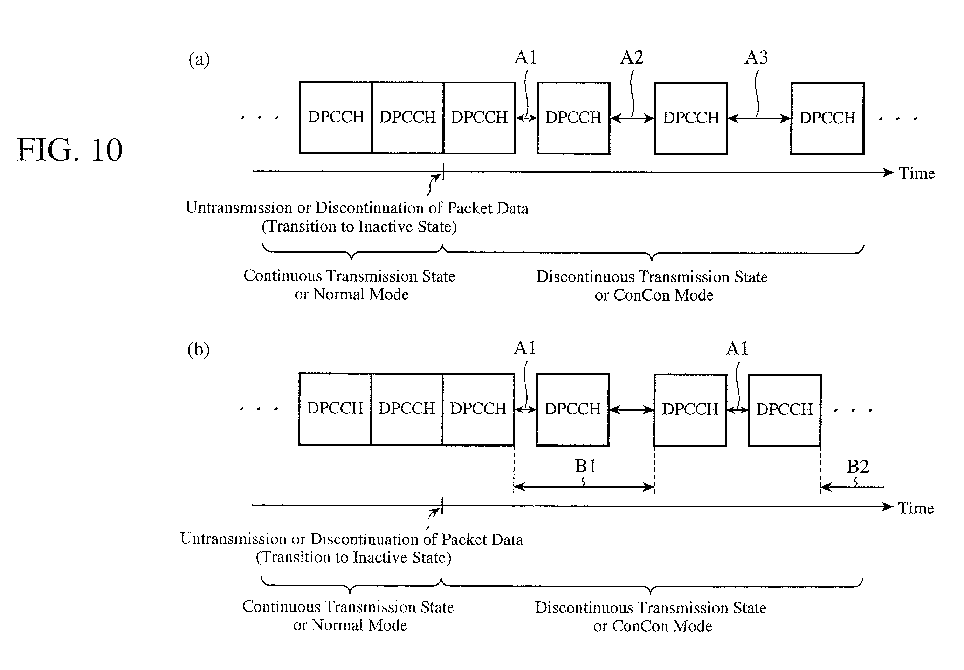

Fig. 10 is an explanatory drawing showing an example of the timing of transmission of a DPCCH of a radio communications system in accordance with Embodiment 2 of the present invention.

Particularly, Fig. 10(A) shows an example in which adjacent time intervals at which a UL-DPCCH is to be transmitted are defined by parameters (A1, A2, ...) when the UL-DPCCH is made to switch to the discontinuous transmission state after transmission of packet data enters an untransmission state.

There can be provided various methods of setting up the parameters (A1, A2, ...) including: (1) a method of setting up, as upper layer control information, the parameters through an exchange of information about the parameters between a radio resource control unit 16 of the fixed station and a radio resource control unit 35 of the mobile station 1; and (2) a method of defining the parameters in a technical specification, and allowing the mobile station 1 to set up the parameters autonomously either under the control of the transmission and reception channel monitoring unit 41 or on the basis of a exchange of a notification (trigger) of the operating state.

Fig. 10(B) shows an example in which adjacent time intervals at which the UL-DPCCH is to be transmitted are defined by two or more kinds of parameters (A1, A2, ..., B1, B2, ...) when the UL-DPCCH is made to switch to the discontinuous transmission state after the transmission of packet data enters the untransmission state (or an un-receiving state).

The setting of the parameters is the same as that of the parameters shown in Fig. 10(A). There can be provided various methods of setting up the plurality of parameters (B1, B2, ...) including: (1) a method of allowing the base station control apparatus 3 to control the setting; (2) a method of allowing the base station 2 to control the setting; and (3) a method of allowing both the base station control apparatus and the base station to control the setting.

As mentioned above, the system according to this Embodiment 2 is so constructed in such a way as to, when a control channel (DPCCH), which, in a conventional art, can be continuously transmitted except for a specific untransmission setting (for example, a setting of Cmpressed mode), is made to switch from the continuous transmission state to the discontinuous transmission state, change the transmission intervals at which the control channel (DPCCH) is to be transmitted gradually. Therefore, the system can prevent a rapid change in the reception of the uplink DPCCH in the fixed station. As a result, the present embodiment offers an advantage of being able to prevent the reference phase detection (or synchronization tracking) capability on the receive side in the fixed station from degrading rapidly. Because rapid variations in the reference phase detection capability can be suppressed, the present embodiment offers another advantage of being able to suppress variations in the capability of demodulating other uplink channels.

Furthermore, when the fixed station judges the reception state of the DPCCH by, for example, detecting the receive power, and then detects discontinuous reception, the fixed station can judge that the mobile station 1 has made a notification (or trigger) of making a transition to the discontinuous state.

Because there is no necessity to explicitly notify any change in the transmission control of the mobile station 1 to the fixed station side, the overhead for the notification is not needed and it also becomes unnecessary to transmit a notification signal (signalling) separately in order to synchronize the transmitting operation (state) of the mobile station 1 and the receiving operation (state) of the base station 2. As a result, because the uplink interference does not increase, the present embodiment offers an advantage of being able to suppress the consumption of the uplink radio resources.

Furthermore, because the receive side of the fixed station also knows the parameter setting in advance, the present invention offers the following advantages: (1) an advantage of stopping resources, such as the receiving circuit, and reducing the power consumption while no UL-DPCCH is transmitted; and (2) an advantage of being able to apply the resources to reception of other channels to use the resources effectively while no UL-DPCCH is transmitted.

In accordance with this Embodiment 2, although the UL-DPCCH enters the discontinuous transmission state (mode) immediately after the transmission of packet data is suspended (or discontinued) or immediately after the reception of packet data is suspended (or discontinued), it is also possible to provide a time offset with a timer setting, a specification of a time interval, or the like. For example, because the mobile station 1 needs to transmit the result (HARQ-ACK) of judgment of reception of HS-DSCH packet data via the HS-DPCCH even if the transmission of the HS-DSCH packet data via a downlink is placed in an untransmission (suspension or discontinuation) state, the mobile station transmits the result (HARQ-ACK) of the judgment of the reception of the packet data after a time required for the mobile station to carry out the process elapses, and then makes a transition to the discontinuous transmission state.

Furthermore, although, in this Embodiment 2, the case in which the DPCCH is made to switch from the continuous transmission state (mode) to the discontinuous transmission state (mode) is shown, this embodiment can also be applied to a case which is reverse to the above-mentioned case. As an alternative, this embodiment can be applied to (used for) both of (1) the case in which the DPCCH is made to switch from the continuous transmission state to the discontinuous transmission state, and (2) the case in which the DPCCH is made to switch from the discontinuous transmission state to the continuous transmission state.

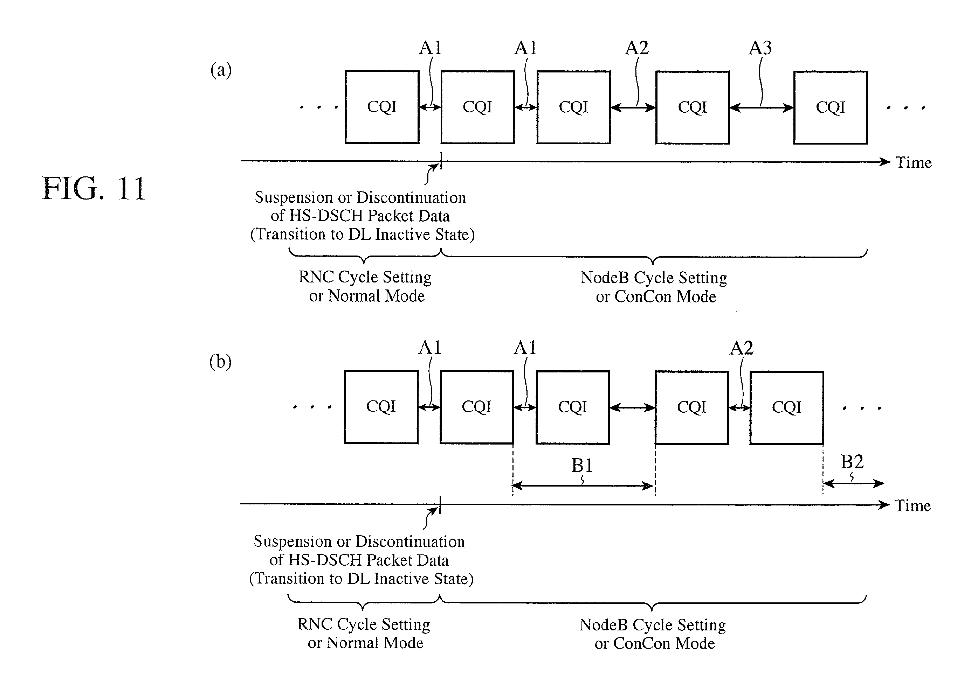

In accordance with this Embodiment 2, although the transmission cycle of the uplink DPCCH channel is made to change gradually, as shown in Fig. 11, it is also possible to apply this changing control to the transmission control of the CQI of the HS-DPCCH separately. At a time corresponding to the transmission time interval (or the transmission setting or the transmission state (mode)) of packet data, the transmission cycle is controlled with a cycle parameter setting (made by the RNC) which is based on a notification of upper layer control information (RRC signalling) from the fixed station side and which complies with the conventional releases, whereas at a time corresponding to the untransmission cycle (or the untransmission setting, the untransmission state, or the untransmission mode) of packet data, the transmission control is performed on the basis of a second cycle parameter.

Furthermore, there can be provided various methods of defining parameters for transmission of the reception result (HARQ-ACK) and parameters for CQI transmission, and their values, including: (1) a method of defining the parameters for transmission of the reception result and the parameters for CQI transmission independently; (2) a method of defining the parameters for transmission of the reception result and the parameters for CQI transmission in such a way that parameters are used as the ones for transmission of the reception result and the ones for CQI transmission; and (3) a method of properly using the parameters according to the results of monitoring by the transmission and reception channel monitoring units 22 and 41.

Embodiment 3.
In above-mentioned Embodiment 2, the transmission intervals at which a channel for transmit power control used for control of the transmit power is to be transmitted are controlled according to the transmission (or reception) status of a channel exclusively used for packet currently monitored by the transmission and reception channel monitoring unit 41, as previously mentioned.

In contrast, in accordance with this Embodiment 3, in consideration of a transmit power set value for the channel for transmit power control for which a transmission mode is set up by a UL-DPCCH processing unit 32, a transmit power margin value of the channel exclusively used for packet is calculated, and the channel for transmit power control and the channel exclusively used for packet which is transmitted within the limits of the transmit power margin value are multiplexed.

More specifically, in accordance with this Embodiment 3, a case in which data transmission rate information about a channel for packet data transmission from a mobile station 1 is determined within the limits of the transmit power margin value of the mobile station 1 is considered, and, in this case, at a time (or a time period) which is defined as reference to measurement (an estimation or a calculation) of the transmit power margin of the mobile station 1, an amount of control channel transmit power control (e.g., an amount of transmit power reduction or an amount of transmit power variations) is taken into consideration.

Concretely, when a E-DCH (E-DPDCH) is made to make a transition to a state of transmission of upper layer packet data (when transmission of the E-DCH is started or when transmission of the E-DCH is restarted), measurement (an estimation or a calculation) of the transmit power margin value of the mobile station 1 is carried out before the data transmission is started (or restarted).

In the measurement (an estimation or a calculation) of the transmit power margin value, (1) when the transmit power of a DPCCH is reduced in the untransmission state (mode) of packet data, the amount of the reduction is taken into consideration, whereas (2) when no packet data are transmitted, the transmit power of the DPCCH which is required for transmission of conventional settings is taken into consideration.

Because the essential features of this Embodiment 3 are not related to CQI (HS-DPCCH) transmission, the explanation of the CQI (HS-DPCCH) transmission will be omitted hereafter.

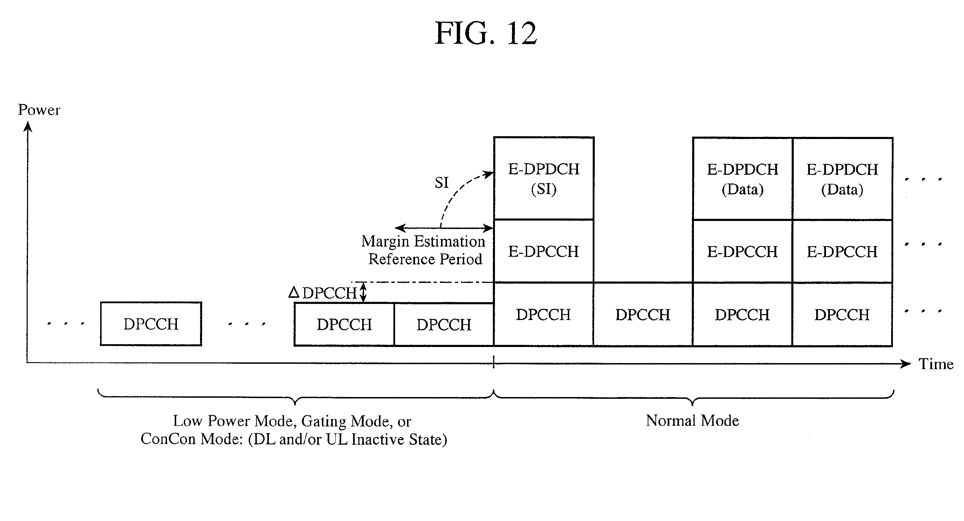

Fig. 12 is an explanatory drawing showing an example of the transmission status of an uplink DPCCH (UL-DPCCH) and those of channels (E-DPDCH/E-DPCCH) for E-DCH. The vertical axis of Fig. 12 shows the power of each channel, and the horizontal axis of Fig. 12 shows a time.

Fig. 12 shows a case in which the system makes a transition from a state of untransmission of E-DCH packet data to a state of transmission of E-DCH packet data.

In the state of untransmission of packet data, the UL-DPCCH is transmitted with low transmit power or is partially untransmitted, and only the UL-DPCCH is transmitted (or partially transmitted).

Before E-DCH data are transmitted, information about the state of the mobile station 1 (referred to as SI (scheduling information) according to the W-CDMA standards) is transmitted.

In order for a fixed station to perform scheduling for E-DCH (E-DPDCH) efficiently, the mobile station state information (SI) needs to be transmitted to the fixed station before E-DCH packet data are transmitted.

The transmission of the mobile station state information (SI) can be carried out periodically or on the basis of an event showing occurrence of transmission data, though when aiming at reduction of the uplink interference in the packet untransmission state, it is desirable that the mobile station state information (SI) is also untransmitted.

The mobile station state information (SI) can include various pieces of information, such as state information about the state of a buffer for packet data transmission and information about the state of the transmit power margin.

In accordance with the conventional standard releases, it is necessary to acquire (1) the difference between "the total transmit power which can be transmitted", and "the total power of parallel transmit channels other than the E-DPDCH" as a first transmit power margin value in order to determine the transmission rate (E-TFC) of the E-DCH (E-DPDCH) of the mobile station 1, and (2) the difference between "the maximum total transmit power of the mobile station" and "the UL-DPCCH transmit power" as a second transmit power margin value in order to determine the scheduling in the E-DCH processing unit 15 of the fixed station.

Furthermore, the information about the second transmit power margin value is piggybacked, as the mobile station state information (SI), onto the E-DPDCH and is transmitted.

Because measurement (an estimation or a calculation) of the first margin quantity is similar to that of the second margin quantity, the mobile station 1 can be implemented in such a way that they are carried out on the basis of measurement (an estimation or a calculation) at the same reference timing.

In addition, in order to determine the E-TFC, the transmit power margin value of the mobile station 1 has to be determined before the process of determining the E-TFC is performed.

When the reference timing for the measurement (an estimation or a calculation) of the transmit power margin value coincides with the timing of the low transmit power (or the discontinuous transmission) of the UL-DPCCH, the transmit power margin value is overestimated and therefore a higher transmission rate of E-DCH data is selected.

In this case, because an SN ratio (SIR) required for the demodulation operation by the demultiplexing unit 21 of the fixed station is insufficient and retransmission from the mobile station 1 is needed, the throughput of the communications system decreases.

To solve this problem, in accordance with this Embodiment 3, (1) before transmission of upper layer data (Data) is started (or restarted), the mobile station state information (SI) is transmitted one or more times. Furthermore, (2) in a case in which the reference timing for measurement (an estimation or a calculation) of the transmit power margin value coincides with the timing of the low UL-DPCCH transmit power (or the UL-DPCCH discontinuous transmission), the E-DCH processing unit 34 of the mobile station 1 takes into consideration a difference quantity from the transmit power according to the conventional specifications about the transmit power control of the UL-DPCCH (e.g., (1) $\Delta$DPCCH value or $A_{cc}$ value in the case of applying low transmit power transmission, (2) the transmit power value according to the conventional specifications about the transmit power control of the UL-DPCCH in the case of DPCCH Gating and UL-DPCCH untransmission, and (3) a value which is determined from the average of $\Delta$DPCCH value or $A_{cc}$ value and the transmit power value when transmission and untransmission coexist).

More specifically, regardless of the actual transmit power of the UL-DPCCH at the reference timing, the transmit power margin value of the mobile station 1 is determined on the basis of the transmit power of the UL-DPCCH which is set up according to a typical (or conventional) method of setting up the transmit power of the DPCCH.

As mentioned above, according to this Embodiment 3, because the amount of reduction in the transmit power or untransmit power of the control channel is taken into consideration in the case of measurement (an estimation or a calculation) of the transmit power margin value of the mobile station 1, in a case in which an uplink interference reduction method described in, for example, nonpatent reference 1 is applied, the transmit power margin value of the mobile station 1 can be prevented from being overestimated at the time of determination of the transmission rate (E-TFC) of packet data. Therefore, the present embodiment offers an advantage of being able to prevent a situation in which the transmit power of the E-DPDCH becomes insufficient due to determination of an excessive transmission rate and hence the number of times that packet retransmission has been performed increases (= the throughput of the communications system decreases).

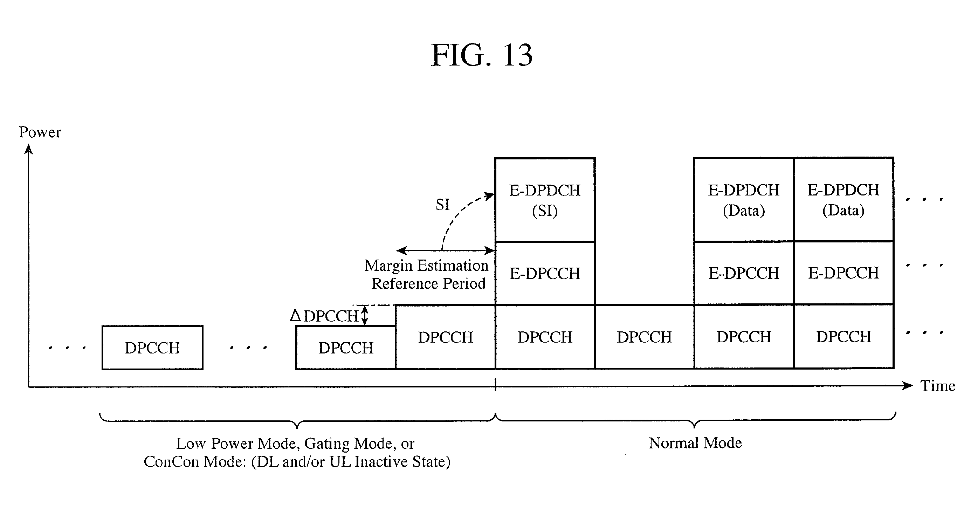

In the example of Fig. 12, when measurement of the transmit power margin value of the mobile station 1 is carried out, the uplink DPCCH (UL-DPCCH) is transmitted in a state in which the transmit power is reduced. As an alternative, as shown in Fig. 13, before the mobile station state information (SI) is transmitted via a channel for E-DCH, the setting of the transmit power of the UL-DPCCH can be transmitted with a value which is defined conventionally (normally).

On the basis of the result of monitoring the state of occurrence of E-DCH data by the transmission and reception channel monitoring unit 41 of the mobile station 1, the UL-DPCCH processing unit 32 outputs control information (not shown) instructing increase in the transmit power to the multiplexing unit 36.

Because, in the fixed station, the transmit power of the DPCCH increases to a conventional specified value (= a value in the normal transmission mode) before reception of the channel for E-DCH, the receiving capabilities (the reference phase detection capability, the synchronization capability, and so on) of the uplink DPCCH can be improved (revived) before reception of the channel for E-DCH is started. Therefore, the present embodiment offers an advantage of improving the capability of demodulating E-DCH packet data.

In Figs. 12 and 13, although the E-DPDCH/E-DPCCH are placed in the untransmission state during a time interval between the transmission of the mobile station state information (SI) and the transmission of data succeeding the transmission of the mobile station state information, the E-DPDCH/E-DPCCH can be alternatively transmitted continuously. The transmission state of the E-DPDCH/E-DPCCH is not limited to that shown in this Embodiment 3.

Embodiment 4.

In above-mentioned Embodiment 3, the transmit power margin value of a channel exclusively used for packet is calculated in consideration of the transmit power set value of a channel for transmit power control for which the transmission mode is set up by the UL-DPCCH processing unit 32, and the channel for transmit power control and the channel exclusively used for packet which is transmitted within the limits of the transmit power margin value are multiplexed, as previously mentioned. In contrast, in accordance with this Embodiment 4, according to the transmission (or reception) status of a channel exclusively used for packet which is currently monitored by a transmission and reception channel monitoring unit 41, a combination of channel formats for a channel for transmit power control which is used for control of transmit power is determined and a plurality of channels for transmit power control are unified with the plurality of channel formats.

More specifically, in accordance with this Embodiment 4, a plurality of formats for a channel used for transmitting data transmission rate setting information are unified to form a group, and other information is transmitted by using a pattern of a combination of the channel formats.

Concretely, an uplink DPCCH (UL-DPCCH) is transmitted collectively within a plurality of unit sections (= slots), and is used, according to a combination of slot formats, for (1) a notification of switching between transmission states (modes) of a control channel in the mobile station 1, (2) a trigger of synchronization between the transmission and reception setting state (or mode) of the UL-DPCCH in the mobile station 1 and that in a fixed station, (3) a response to the above-mentioned notification (1) or (2), or the like.

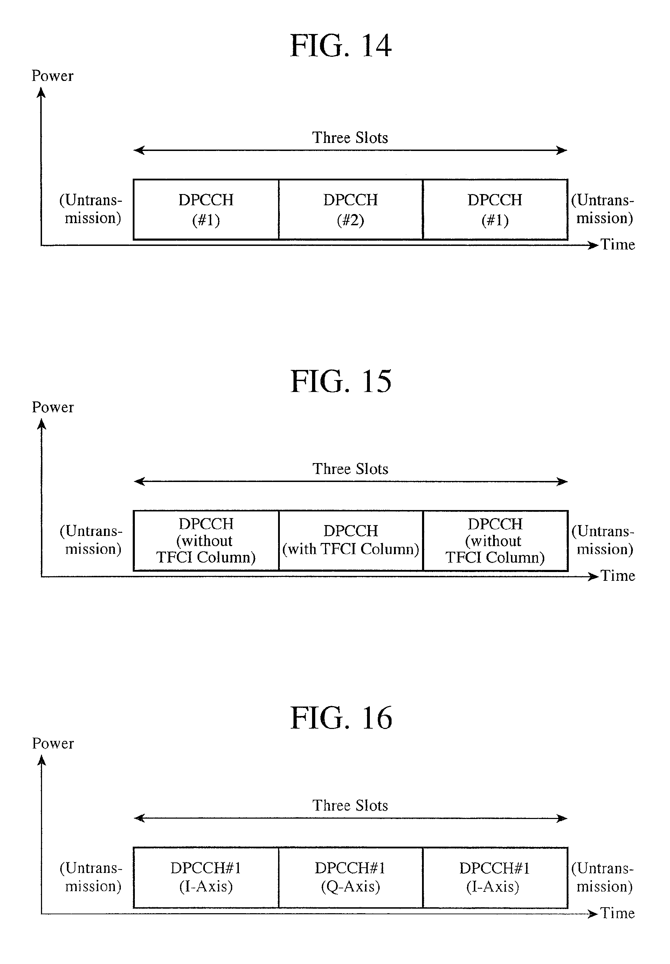

Fig. 14 is an explanatory drawing showing DPCCH transmission of a radio communications system in accordance with Embodiment 4 of the present invention. The vertical axis of Fig. 14 shows a transmit channel (or transmit power) and the horizontal axis of Fig. 14 shows a time, and the transmission timing of the UL-DPCCH is shown conceptually in the figure.

An example in which three slots of DPCCH are transmitted together and the first and third slots have the same format is shown in Fig. 14.

The slot formats shown in Fig. 14 can be defined by the conventional standards or can be defined newly.

Fig. 15 is an explanatory drawing showing an example of the transmission timing of the UL-DPCCH shown in Fig. 14.

In Fig. 15, formats each having no TFC information column (in the figure, TFC information is referred to as TFCI) and a format having a TFC information column are combined.

A selection of the formats is carried out by a UL-DPCCH processing unit 32 on the basis of the transmission and reception status of packet data by the transmission and reception channel monitoring unit 41.

A fixed station in accordance with the present invention can reconstruct other information which is notified thereto on the basis of the received combination of the DPCCH formats.

Because this Embodiment 4 is targeted for a case in which no channel (UL-DPDCH) for DCH is transmitted, a fixed station which complies with only the conventional releases cannot demodulate data having a format having a TTC column.

However, because an uplink DPCCH is demodulated continuously by assuming that it is continuously transmitted, if the untransmission time interval of the DPCCH and the transmission time intervals of other formats each have a length of the order of several slots, the DPCCH reception demodulation capability and the DPCCH synchronization tracking capability of the fixed station do not degrade greatly and therefore the backward compatibility can be ensured.

As mentioned above, according to this Embodiment 4, a group is formed using a plurality of formats for a channel for transmission of data transmission rate setting information, and transmission of other control information can be carried out by using a combination of channel formats. Therefore, the present embodiment offers an advantage of eliminating the necessity to provide both an additional channel for notification and a signal transmission operation in order to achieve synchronization between the transmission state of the mobile station 1 and the reception state of the fixed station.

Furthermore, a DPCCH is indispensable in order to hold a physical radio link. Therefore, because a fixed station which is implemented in such a way as to meet the conventional standard specifications needs to always receive a DPCCH basically (except in a case of a transmission gap setting called a Compressed mode), the present embodiment offers another advantage of eliminating the necessity to separately dispose a receiving apparatus used for a notification of the synchronization between the states, and a further advantage of being able to prevent the structure of the fixed station from becoming complicated.

In this Embodiment 4, the case in which the number of DPCCH slots which construct the group is 3 is shown. As an alternative, the number of DPCCH slots can be another integer value.

The formats (numbers) are not limited to the formats (numbers) shown in the figure.

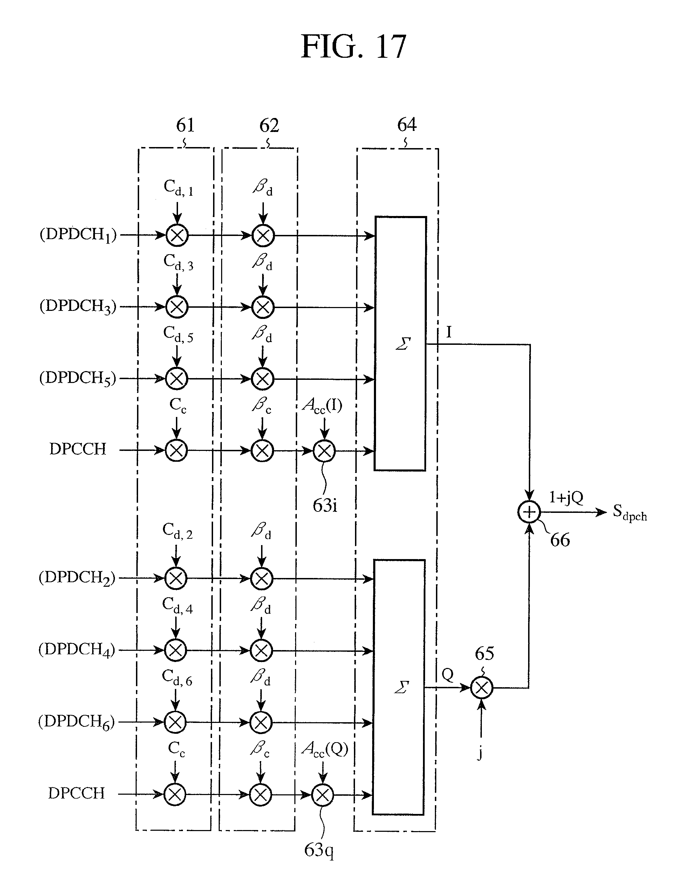

Hereafter, a variant of this Embodiment 4 will be explained with reference to Figs. 16 and 17.

In Fig. 16, a plurality of slots of an uplink DPCCH are collectively transmitted as a group, and one axis (the I axis or the Q axis) of a complex signal ($S_{dpch}$) to be transmitted is changed.

In Fig. 16, all the channel formats are the same. As an alternative, they can be different, as shown in Fig. 14 or 15.

Fig. 17 is a block diagram showing the principle of operation of a spreading unit 51a of the mobile station 1 for performing DPCCH transmission as shown in Fig. 16.

The spreading unit 51a of the mobile station 1 shown in Fig. 17 differs from the spreading unit 51a of the mobile station 1, as shown in Fig. 5, in accordance with above-mentioned Embodiment 1 in that the spreading unit 51a according to Embodiment 4 has multipliers 63i and 63q in such a way as to also transmit a DPCCH as an I-axis signal.

The multipliers 63i and 63q are distinguished from each other, and channel amplitude coefficients are distinguished from each other by attaching I(i) and Q(q) to their reference characters, respectively. Additional coefficients will be described hereafter as different ones ($A_{cc}$ (I), $A_{cc}$ (Q)), though an identical parameter can be used as them.

A multiplication process using channel amplitude coefficients, which is similar to the process, as shown in Fig. 5, performed on a DPCCH, is performed on a DPCCH signal on the I-axis side of each of the multipliers 61 and 62. Furthermore, the signal is multiplied by the additional coefficient ($A_{cc}(I)$) by the multiplier 63i and the output signal of the multiplier 63i is inputted to an adder 64, so that the signal becomes an I-axis component.

Switching between the I-axis and the Q-axis is performed by the UL-DPCCH processing unit 32. As an alternative, the switching between the I-axis and the Q-axis is performed by the multiplexing unit 36 according to an instruction from the UL-DPCCH processing unit 32.

A fixed station which complies with the conventional standards cannot recognize an uplink DPCCH which it has received as a Q-axis (a reference phase), and cannot receive and demodulate the I-axis transmission component of the DPCCH.

By restricting to a part of the DPCCH group and then carrying out I-axis transmission of the part, even a fixed station which complies with the conventional standard specifications can receive and demodulate a DPCCH as usual, and therefore no problem arises even if a base station which complies with the conventional standards and a base station according to the present invention coexist and therefore the backward compatibility can be ensured.

In the above-mentioned variant, the case in which the same format is used for both the I-axis and the Q-axis is shown. As an alternative, different formats can be used for the I-axis and the Q-axis.

More specifically, there can be provided, for example, the following various combinations including: (1) a combination of use of conventional different formats; (2) a combination of use of the same format as that according to the conventional standard for the Q-axis and use of a newly-defined format for the I-axis; and (3) a combination of use of only the Q-axis for transmission when the mobile station is communicating with at least one conventional base station via an uplink and use of the I-axis for transmission also when the mobile station is communicating with only a base station in accordance with the present invention (ConCon mode).

Furthermore, when any DPDCH is untransmitted as the mobile station settings or the mobile station capability, while it is not necessary to transmit bits for information, such as TFC, dummy bits can be inserted when used for a notification.

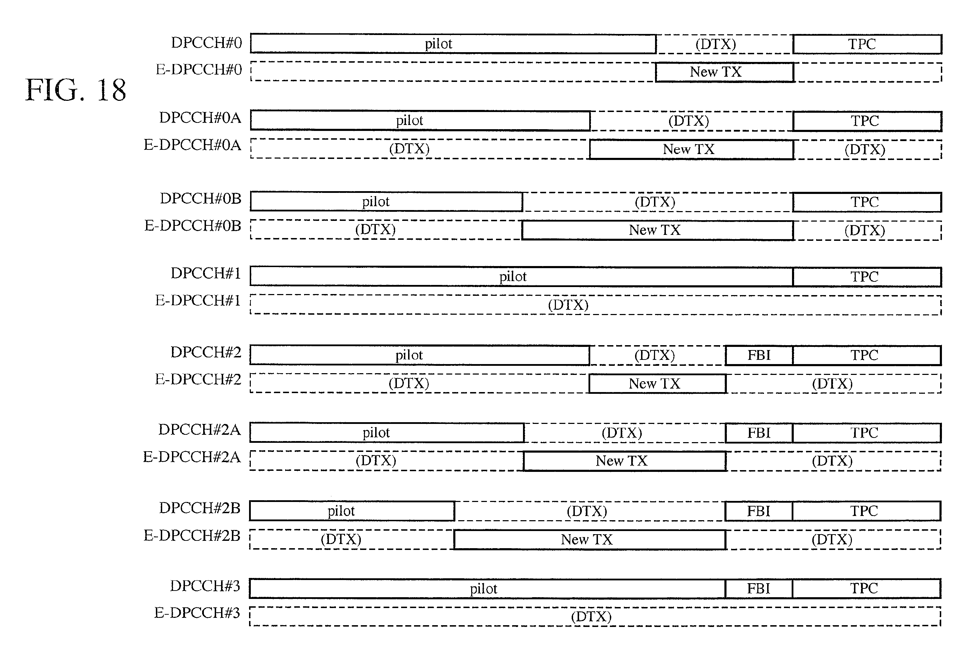

Hereafter, in relation to the present invention, a case in which channel formats (numbers) for a DPCCH and a E-DPCCH are newly defined will be explained with reference to Fig. 18.

Fig. 18 is an explanatory drawing showing an example of a correspondence between new formats (numbers) for a DPCCH and new formats (numbers) for a E-DPCCH.

The new DPCCH formats have the order and the lengths of PILOT, TFC, and FBI in the DPCCH formats defined by the conventional releases, just as they are, and their columns of TFC and FBI are defined as untransmission (DTX).

Each of the new E-DPCCH formats is transmitted via the untransmission (DTX) region of a new DPCCH format, and the other regions are defined as untransmission (DTX).

For example, making it possible to provide an extension for a case in which no downlink packets (HS-DSCH and HS-PDSCH) are transmitted while uplink packets (E-DCH and E-DPDCH) are transmitted is considered.

Such a case in which packets are transmitted via only one of the links is also defined as a ConCon mode, and transmission of an uplink DPCCH is controlled.

When E-DCH packets are transmitted and a conventional DPCCH format having bits for TFC and FBI is used, an untransmission time period during which the bits for TFC and FBI are untransmitted is used and E-DPCCH information is transmitted using a new E-DPCCH format.

Thus, because new formats are defined for the E-DPCCH and the E-DPCCH is transmitted according to a DPCCH format, the flexibility in the selection of a DPCCH format and the backward compatibility can be ensured.

Furthermore, because the DPCCH does not enter a partial untransmission state during a transmission slot even if the bits for TFC and FBI are not used, the present embodiment offers an advantage of being able to prevent a EMC problem what is so-called hearing aid from arising.

The E-DPCCH formats in Fig. 18 are defined in relation to the DPCCH formats which comply with the conventional release specifications. As an alternative, additional DPCCH formats can be newly defined, and new E-DPCCH formats can be created in relation to these additional DPCCH formats.

Furthermore, in a general transmission setting or a transmission state (Normal mode), an extension to the system can be provided in such a way that a E-DPCCH is transmitted by using a format as shown in Fig. 18.

Embodiment 5.

In accordance with above-mentioned Embodiment 4, according to the transmission (or reception) status of a channel exclusively used for packet currently monitored by the transmission and reception channel monitoring unit 41, a combination of channel formats for a channel for transmit power control which is used for control of transmit power is determined, and a plurality of channels for transmit power control are unified with the plurality of channel formats, as previously mentioned. In accordance with this Embodiment 5, in a transmission mode in which a channel for transmit power control and a channel exclusively used for packet are not multiplexed, transmission of link quality information is repeated a plurality of times.

More specifically, in accordance with this Embodiment 5, when transmitting a control channel for packet channels, it is indispensable to divide the control channel for packet channels into a plurality of parts and to repeatedly carry out transmission of one of them in turn a plurality of times.

Concretely, when, for example, in the W-CDMA method, a channel for HSDPA is set up and data packets (HS-PDSCH) and packet transmission control information (HARQ-ACK) are placed in an untransmission state (e.g., a ConCon mode, a UL-inactive state, or a DL-inactive state), it is indispensable to repeatedly carry out transmission of link quality information (CQI) via an uplink control channel (HS-DPCCH).

In accordance with the conventional release specifications, CQI transmission is performed periodically regardless of whether or not transmission of downlink packet data is carried out, except in a specific case (i.e., in a case in which an optional specification is applied), and one CQI is carried out during one unit time (referred to as a subframe in the W-CDMA method). Because transmission of a DPCCH is also required for the demodulation in a fixed station, the above-mentioned two transmissions are certainly performed in parallel.

The parallel transmissions cause increase in the peak powers of the transmission signals, and increase in the variations (PAR: Paek to Average Ratio) of the transmit power. This means increase in the margin in terms of the radio resource management.

Furthermore, because the repeat transmission of CQI is an optional specification and is not indispensable, the increase in the peak power and the variations in the transmit power are large.

Because the increase in the peak power and the increase in the variations of the transmit power can be suppressed by making the division transmission and the repeat transmission indispensable, there is provided an advantage of being able to suppress the interference between adjacent channels which results from reduction in the margin of the radio resources and reduction in the PAR.

**[0136]** As mentioned above, according to this Embodiment 5, the repeat transmission of the link quality information (CQI) from the mobile station 1 is carried out indispensably when no packet data are transmitted. Therefore, the peak power of the CQI transmission at a certain time can be reduced, and therefore the variations of the transmit power of the mobile station 1 can be suppressed. Therefore, the margin in terms of the uplink radio resource management can be reduced. There is provided an advantage of enabling effective use of the radio resources, such as making use of the reduction for communications by another mobile station, or accommodating another mobile station in the cell.

New transmission control parameters can be introduced, and the repeat transmission (division transmission) of CQI can be combined with the untransmission of CQI.

Embodiment 6.

In accordance with above-mentioned Embodiment 5, in the transmission state (mode) in which a channel for transmit power control and a channel exclusively used for packet are not multiplexed, transmission of the link quality information is repeatedly carried out a plurality of times, as previously mentioned. In contrast, in accordance with this Embodiment 6, according to the transmission mode of a channel for transmit power control, the transmission timing of the channel for transmit power control is synchronized with that of a channel exclusively used for packet.

More specifically, in accordance with this Embodiment 6, when a plurality of control channels having different transmission timing references are transmitted in parallel (or their transmission settings are made), and packet data are placed in an untransmission state (mode), a control channel which complies with an old release is controlled in such a way as to enter the transmission state or the untransmission state in synchronization with the transmission control timing of a control channel for packets which complies with a new release.

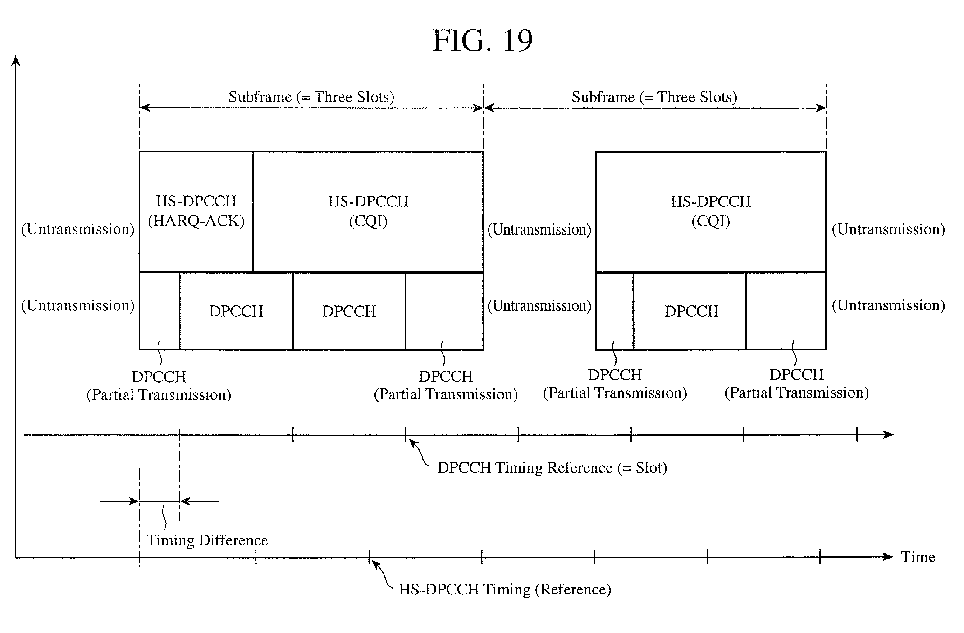

Fig. 19 is an explanatory drawing showing the transmission timing of a DPCCH of a radio communications system in accordance with Embodiment 6 of the present invention.

The vertical axis of Fig. 19 shows a mobile station's transmit power (or channel power), and the horizontal axis of Fig. 9 shows a time.

In the example of Fig. 19, an HS-DPCCH changes from an untransmission state (DTX) -> a HARQ-ACK transmission state ->a CQI transmission state -> an untransmission state (a HARQ-ACK untransmission state: DTX) -> a CQI transmission state -> an untransmission state (DTX), and control of transmission of a DPCCH is carried out according to the transmission timing of the HS-DPCCH.

The DPCCH is partially transmitted in synchronization with the transmission of the HS-DPCCH within some transmission timing sections.

A UL-DPCCH processing unit 32 of the mobile station 1 obtains information about the transmission and reception status of packets from a transmission and reception channel monitoring unit 41, and carries out a control operation to transmit all or part of the DPCCH according to the timing at which the HS-DPCCH is transmitted via an uplink.

As mentioned above, according to this Embodiment 6, when a plurality of control channels having different transmission timing references are transmitted in parallel, transmission of a channel which complies with an old release is controlled in such a way as to be synchronized with transmission of a channel for packets which complies with a new release. A DPCCH is assumed to be continuously transmitted in order to perform closed loop transmit power control, except in a case of a specific untransmission setting (referred to as a Compressed mode in the W-CDMA method). When a DPCCH, which is conventionally specified in such a way as to be continuously transmitted, is transmitted discontinuously, because control of the transmission of the DPCCH (switching of the DPDCH to the untransmission state) is carried out in synchronization with the transmission (or the transmission timing reference) of the HS-DPCCH, an advantage of being able to further reduce the uplink interference is provided.

In accordance with this Embodiment 6, because the DPCCH is partially transmitted in DPCCH slots before and after the transmission of the HS-DPCCH, while it is coupled with another DPCCH which is transmitted in one entire slot, any untransmission operation which, as a whole, requires a time shorter than the slot length can be avoided and therefore a EMC problem resulting from an untransmission operation can be also prevented from arising.

In accordance with this Embodiment 6, at a time when transmission of an HS-DPCCH is started and at a time when transmission of an HS-DPCCH is stopped, transmission of a DPCCH is performed partially. As an alternative, at only one of the two times, transmission of a DPCCH can be performed partially.

For example, in a DPCCH slot which coincides with a start of transmission of an HS-DPCCH, the entire DPCCH slot is transmitted in advance of the transmission of the HS-DPCCH. As a result, a receiving unit 20 of a fixed station can receive the DPCCH in advance prior to reception of the HS-DPCCH, and the synchronization detection (reference phase detection) capability of the receiving system can be ensured. Therefore, there is provided an advantage of also making the receiving capability of the HS-DPCCH compare favorably with that in the case of conventional DPCCH continuous transmission.

Transmission of a DPCCH prior to transmission of an HS-DPCCH can be carried out over a plurality of slot lengths according to, for example, the operating conditions of the channels, and the DPCCH can be switched to the untransmission state at the same time when the transmission of the HS-DPCCH is stopped.

Furthermore, when a DPCCH is transmitted partially, a DPCCH slot format which differs from that which complies with the conventional release specifications can be used.

For example, a format in which the order of signals, such as a pilot signal to be transmitted via a conventional DPCCH, a transmit power control signal (TPC), and a feedback signal (FBI), is changed is added newly and is used.

Furthermore, the DPCCH format to be used can be changed by the time difference between the HS-DPCCH and the DPCCH. Which DPCCH format is used is notified to the mobile station 1 as upper layer control information (an RRC signalling) when the DPCCH and the HS-DPCCH are set up. When the DPCCH is transmitted partially, it is also possible to interchange the transmission elements of the DPCCH according to the timing difference, and to define the order of the interchanged elements as a new format.

Furthermore, the fixed station can be constructed in such a way as to detect partial transmission of a DPCCH. For example, there can be provided the following various methods including: (1) a method of detecting partial DPCCH transmission at a slot timing which is not in the untransmission state, resulting from the Compressed mode; and (2) a method of detecting whether the timing at which transmission of the DPCCH is switched on or off is synchronized with the transmission timing reference of an HS-DPCCH at a slot timing which is not in the untransmission state.

As a result, a DPCCH can be used as a change notification signal (a trigger for synchronization between the transmission and reception state of the mobile station and that of the fixed station) showing a notification of change in the transmission control (mode) of the DPCCH of the mobile station 1. In this case, there is provided an advantage of eliminating the necessity to separately provide a channel and information for making a notification of information to the fixed station, and another advantage of being able to suppress the increase in the uplink interference.

As previously described in above-mentioned Embodiments 1 to 6, a detailed transmission control operation in a status (a state or a transmission control mode) in which no upper layer data packet are transmitted while a channel exclusively used for packet is set up is defined in such a way that the operation of a mobile station is standardized. Therefore, a mobile station, a fixed station, and a radio communications system which are optimal for reduction in the uplink interference in the data untransmission state can be provided, and efficient use of the radio resources can be made.

It cannot be overemphasized that a combination of two or more of above-mentioned Embodiments 1 to 6 can be used and the same advantages as those shown in the two or more embodiments are provided.

In any of above-mentioned Embodiments 1 to 6, the case in which the embodiment is applied to the radio communications system which uses the Frequency Division Multiplexing (FDD) method among the W-CDMA methods is explained, as previously explained. As an alternative, any of the above-mentioned embodiments can be applied to a radio communications system which uses a method, such as time division multiplexing (e.g., a TDD method or a CDMA2000 method), within the scope of the ideas of the present invention, and the radio communications system according to the present invention is not limited to the one according to any of above-mentioned Embodiments 1 to 6.

Furthermore, in the present invention, the case in which a new E-DPCCH format is used in a status (state or mode) (1) in which no DCH (DPDCH) is set up, and in a status (2) in which no data transmission via a channel for packets is carried out is explained. This is because the present invention is very effective especially for the above-mentioned cases. However, the present invention can be also applied to a case in which a DCH (DPDCH) is set up, like in a conventional case, and, in this case, the same advantages can be provided.

Industrial Applicability

As mentioned above, the radio communications system in accordance with the present invention can be applied to a mobile station and a fixed station which operate in mobile communications systems including a cellular communications system, and a radio communications system.

**Claims**

1. A mobile station comprising:

 a transmission state monitor means for monitoring a transmission status of a channel exclusively used for packet used for transmission of packets;

a control channel processing means for setting up a transmission mode of a channel for transmit power control used for control of transmit power according to the transmission status of the channel exclusively used for packet which is monitored by said transmission state monitor means;

a multiplexing means for multiplying said channel for transmit power control by a channel coefficient corresponding to the transmission mode set up by said control channel processing means, and for multiplexing the channel for transmit power control multiplied by the channel coefficient and said channel exclusively used for packet; and

a transmitting means for transmitting the channel for transmit power control and the channel exclusively used for packet which are multiplexed by said multiplexing means to a fixed station.

2. A radio communications system including a mobile station which transmits a channel for transmit power control used for control of transmit power and a channel exclusively used for packet used for transmission of packets, and a fixed station which receives the channel for transmit power control and the channel exclusively used for packet which are transmitted from said mobile station, **characterized in that** said mobile station comprises: a transmission state monitor means for monitoring a transmission status of said channel exclusively used for packet; a control channel processing means for setting up a transmission mode of said channel for transmit power control according to the transmission status of the channel exclusively used for packet which is monitored by said transmission status monitor means; a multiplexing means for multiplying said channel for transmit power control by a channel coefficient corresponding to the transmission mode set up by said control channel processing means, and for multiplexing the channel for transmit power control multiplied by the channel coefficient and said channel exclusively used for packet; and a transmitting means for transmitting the channel for transmit power control and the channel exclusively used for packet which are multiplexed by said multiplexing means to said fixed station.

3. A mobile station comprising:

 a transmission status monitor means for monitoring a transmission status of a channel exclusively used for packet used for transmission of packets;

a control channel processing means for setting up transmission intervals at which a channel for transmit power control used for control of transmit power is to be transmitted according to the transmission status of the channel exclusively used for packet which is monitored by said transmission status monitor means; a multiplexing means for multiplexing the channel for transmit power control which is to be transmitted at the transmission intervals controlled by said control channel processing means and said channel exclusively used for packet; and a transmitting means for transmitting the channel for transmit power control and the channel exclusively used for packet which are multiplexed by said multiplexing means to a fixed station.

4. A fixed station comprising:

a receiving means for receiving a channel for transmit power control used for control of transmit power and a channel exclusively used for packet used for transmission of packets from a mobile station; a demultiplexing means for demultiplexing the channel for transmit power control and the channel exclusively used for packet which are received by said receiving means; and a reception mode setting means for monitoring the channel for transmit power control demultiplexed by said demultiplexing means to detect reception intervals at which said receiving means receives said channel for transmit power control, and to set up a reception mode of said channel for transmit power control from the reception intervals at which said receiving means receives said channel for transmit power control.

5. A radio communications system including a mobile station which transmits a channel for transmit power control used for control of transmit power and a channel exclusively used for packet used for transmission of packets, and a fixed station which receives the channel for transmit power control and the channel exclusively used for packet which are transmitted from said mobile station, **characterized in that** said mobile station comprises:

a transmission status monitor means for monitoring a transmission status of said channel exclusively used for packet; a control channel processing means for setting up transmission intervals at which the channel for transmit power control used for control of transmit power is to be transmitted according to the transmission status of the channel exclusively used for packet which is monitored by said transmission status monitor means;

a multiplexing means for multiplexing the channel for transmit power control which is to be transmitted at the transmission intervals controlled by said control channel processing means and said channel exclusively used for packet; and a transmitting means for transmitting the channel for transmit power control and the channel exclusively used for packet which are multiplexed by said multiplexing means to said fixed station, and **characterized in that** said fixed station comprises:

a receiving means for receiving the channel for transmit power control and the channel exclusively used for packet from said mobile station; a demultiplexing means for demultiplexing the channel for transmit power control and the channel exclusively used for packet which are received by said receiving means; and a reception mode setting means for monitoring the channel for transmit power control demultiplexed by said demultiplexing means to detect reception intervals at which said receiving means receives said channel for transmit power control, and to set up a reception mode of said channel for transmit power control from the reception intervals at which said receiving means receives said channel for transmit power control.

6. A mobile station comprising:

a transmission status monitor means for monitoring a transmission status of a channel exclusively used for packet used for transmission of packets; a control channel processing means for setting up a transmission mode of a channel for transmit power control used for control of transmit power according to the transmission status of the channel exclusively used for packet which is monitored by said transmission status monitor means; a multiplexing means for calculating a transmit power margin value of said channel exclusively used for packet in consideration of a transmit power setting of the channel for transmit power control whose transmission mode is set up by said control channel processing means, and for multiplexing said channel for transmit power control and said channel exclusively used for packet which is to be transmitted within limits of said transmit power margin value; and a transmitting means for transmitting the channel for transmit power control and the channel exclusively used for packet which are multiplexed by said multiplexing means to a fixed station.

7. A mobile station comprising:

a transmission status monitor means for monitoring a transmission status of a channel exclusively used for packet used for transmission of packets;
a control channel processing means for determining a combination of a plurality of channel formats for a channel for transmit power control used for control of transmit power according to the transmission status of the channel exclusively used for packet which is monitored by said transmission status monitor means to unify a plurality of channels for transmit power control with the plurality of channel formats;
a multiplexing means for multiplexing the channels for transmit power control which are unified by said control channel processing means, and said channel exclusively used for packet; and
a transmitting means for transmitting the channels for transmit power control and the channel exclusively used for packet which are multiplexed by said multiplexing means to a fixed station.

8. A mobile station including a transmission status monitor means for monitoring a transmission status of a channel exclusively used for packet used for transmission of packets, a control channel processing means for setting up a transmission mode of a channel for transmit power control used for control of transmit power according to the transmission status of the channel exclusively used for packet which is monitored by said transmission status monitor means, a multiplexing means for multiplexing the channel for transmit power control whose transmission mode is set up by said control channel processing means and said channel exclusively used for packet, and a transmitting means for transmitting the channel for transmit power control and the channel exclusively used for packet which are multiplexed by said multiplexing means to a fixed station, **characterized in that**
said multiplexing means repeatedly outputs link quality information to said transmitting means a plurality of times in a transmission mode in which said multiplexing means does not multiplex said channel for transmit power control and said channel exclusively used for packet.

9. A mobile station including a transmission status monitor means for monitoring a transmission status of a channel exclusively used for packet used for transmission of packets, a control channel processing means for setting up a transmission mode of a channel for transmit power control used for control of transmit power according to the transmission status of the channel exclusively used for packet which is monitored by said transmission status monitor means, a multiplexing means for multiplexing the channel for transmit power control whose transmission mode is set up by said control channel processing means and said channel exclusively used for packet, and a transmitting means for transmitting the channel for transmit power control and the channel exclusively used for packet which are multiplexed by said multiplexing means to a fixed station, **characterized in that**
said control channel processing means synchronizes a transmission timing at which said channel for transmit power control is transmitted with a transmission timing at which said channel exclusively used for packet is transmitted according to said transmission mode.

# FIG. 1

# FIG. 2

Block diagram showing:

- **19** — Antenna
- **20** — Receiving Unit
- **21** — Demultiplexing Unit
- **17** — Multiplexing Unit
- **18** — Transmitting Unit
- **22** — Transmission and Reception Channel Monitoring Unit
- **11** — HSDPA Processing Unit
- **12** — CPICH Processing Unit
- **13** — DL-DPCCH Processing Unit
- **14** — (DL-DCH Processing Unit)
- **15** — E-DCH Processing Unit
- **16** — Radio Resource Control Unit

Connections and labels:

- Upper Layer Control Information → to Radio Resource Control Unit (from Demultiplexing Unit 21)
- E-DCH (DCH) Data
- to E-DCH Processing Unit — E-DPDCH
- HS-DPCCH
- Radio Resource Control Unit →
- HS-PDSCH /HS-SCCH
- CPICH
- DL-DPCCH
- HS-DSCH Data
- (DCH Data)
- (DL-DPDCH)
- E-AGCH /E-RGCH
- E-HICH
- E-DPDCH [from Demultiplexing Unit]
- to HSDPA Processing Unit
- Upper Layer Control Information
- Radio Resource Control Unit ← Upper Layer Control Information — from Demultiplexing Unit

EP 1 998 483 A1

FIG. 3

Upper Layer Control Information

to Radio Resource Control Unit ←

to E-DCH Processing Unit ←
E-AGCH /E-RGCH /E-HICH

HS-DSCH (DCH) Data

41~ Transmission and Reception Channel Monitoring Unit

31~ HSDPA Processing Unit
CQI Processing

CPICH
HARQ-ACK
HS-DPCCH

40 Demultiplexing Unit

39 Receiving Unit

38

32~ UL-DPCCH Processing Unit
UL-DPCCH

(DCH Data)

33~ (UL-DCH Processing Unit)
(UL-DPDCH)

~36 Multiplexing Unit

37 Transmitting Unit

E-DCH Data

E-AGCH /E-RGCH /E-HICH [from Demultiplexing Unit]

E-DCH Processing Unit ~34
E-DPCCH /E-DPDCH

~35 Radio Resource Control Unit

Upper Layer Control Information

Upper Layer Control Information

from Demultiplexing Unit

EP 1 998 483 A1

# FIG. 4

# FIG. 6

# FIG. 5

# FIG. 7

# FIG. 8

| Signalled values for Acc | Quantized amplitude ratios Acc |
| --- | --- |
| 15 | 1.0 |
| 14 | 14/15 |
| 13 | 13/15 |
| 12 | 12/15 |
| 11 | 11/15 |
| 10 | 10/15 |
| 9 | 9/15 |
| 8 | 8/15 |
| 7 | 7/15 |
| 6 | 6/15 |
| 5 | 5/15 |
| 4 | 4/15 |
| 3 | 3/15 |
| 2 | 2/15 |
| 1 | 1/15 |
| 0 | Switch off |

# FIG. 9

FIG. 10

(a)

· · · | DPCCH | DPCCH | DPCCH |↔| DPCCH |←→| DPCCH |←→| DPCCH | · · · →Time

A1   A2   A3

Untransmission or Discontinuation of Packet Data
(Transition to Inactive State)

Continuous Transmission State
or Normal Mode

Discontinuous Transmission State
or ConCon Mode

(b)

· · · | DPCCH | DPCCH | DPCCH |↔| DPCCH |←→| DPCCH |↔| DPCCH | · · · →Time

A1   A1

B1   B2

Untransmission or Discontinuation of Packet Data
(Transition to Inactive State)

Continuous Transmission State
or Normal Mode

Discontinuous Transmission State
or ConCon Mode

EP 1 998 483 A1

EP 1 998 483 A1

FIG. 11

(a)

A1    A1    A2    A3

· · · | CQI | ↔ | CQI | ↔ | CQI | ↔ | CQI | ↔ | CQI | · · ·

→ Time

Suspension or Discontinuation
of HS-DSCH Packet Data
(Transition to DL Inactive State)

RNC Cycle Setting          NodeB Cycle Setting
or Normal Mode            or ConCon Mode

(b)

A1    A1         A2

· · · | CQI | ↔ | CQI | ↔ | CQI | ↔ | CQI | ↔ | CQI | · · ·

B1          B2

→ Time

Suspension or Discontinuation
of HS-DSCH Packet Data
(Transition to DL Inactive State)

RNC Cycle Setting          NodeB Cycle Setting
or Normal Mode            or ConCon Mode

# FIG. 12

Power

SI

E-DPDCH
(SI)

E-DPDCH
(Data)

E-DPDCH
(Data)

Margin Estimation
Reference Period

E-DPCCH

E-DPCCH

E-DPCCH

ΔDPCCH

DPCCH

DPCCH

DPCCH

DPCCH

DPCCH

DPCCH

DPCCH

Time

Low Power Mode, Gating Mode, or
ConCon Mode: (DL and/or UL Inactive State)

Normal Mode

EP 1 998 483 A1

# FIG. 13

Power

SI

E-DPDCH
(SI)

E-DPDCH
(Data)

E-DPDCH
(Data)

Margin Estimation
Reference Period

E-DPCCH

E-DPCCH

E-DPCCH

ΔDPCCH

DPCCH

DPCCH

DPCCH

DPCCH

DPCCH

DPCCH

DPCCH

DPCCH

Time

Low Power Mode, Gating Mode, or
ConCon Mode: (DL and/or UL Inactive State)

Normal Mode

EP 1 998 483 A1

# FIG. 14

Power

Three Slots

| (Untrans-mission) | DPCCH (#1) | DPCCH (#2) | DPCCH (#1) | (Untrans-mission) |
|---|---|---|---|---|

Time

# FIG. 15

Power

Three Slots

| (Untrans-mission) | DPCCH (without TFCI Column) | DPCCH (with TFCI Column) | DPCCH (without TFCI Column) | (Untrans-mission) |
|---|---|---|---|---|

Time

# FIG. 16

Power

Three Slots

| (Untrans-mission) | DPCCH#1 (I-Axis) | DPCCH#1 (Q-Axis) | DPCCH#1 (I-Axis) | (Untrans-mission) |
|---|---|---|---|---|

Time

# FIG. 17

FIG. 18

| DPCCH#0 | pilot | (DTX) | TPC |
| E-DPCCH#0 | | New TX | |

| DPCCH#0A | pilot | (DTX) | TPC |
| E-DPCCH#0A | (DTX) | New TX | (DTX) |

| DPCCH#0B | pilot | (DTX) | TPC |
| E-DPCCH#0B | (DTX) | New TX | (DTX) |

| DPCCH#1 | pilot | TPC |
| E-DPCCH#1 | (DTX) |

| DPCCH#2 | pilot | (DTX) | FBI | TPC |
| E-DPCCH#2 | (DTX) | New TX | (DTX) |

| DPCCH#2A | pilot | (DTX) | FBI | TPC |
| E-DPCCH#2A | (DTX) | New TX | (DTX) |

| DPCCH#2B | pilot | (DTX) | FBI | TPC |
| E-DPCCH#2B | (DTX) | New TX | (DTX) |

| DPCCH#3 | pilot | FBI | TPC |
| E-DPCCH#3 | (DTX) |

EP 1 998 483 A1

# FIG. 19

Subframe (= Three Slots)

Subframe (= Three Slots)

(Untransmission)

HS-DPCCH
(HARQ-ACK)

HS-DPCCH
(CQI)

(Untransmission)

HS-DPCCH
(CQI)

(Untransmission)

(Untransmission)

DPCCH

DPCCH

(Untransmission)

DPCCH

(Untransmission)

DPCCH
(Partial Transmission)

DPCCH
(Partial Transmission)

DPCCH
(Partial Transmission)

DPCCH
(Partial Transmission)

DPCCH Timing Reference (= Slot)

Timing Difference

HS-DPCCH Timing (Reference)

Time

EP 1 998 483 A1

<table>
<tr><td colspan="2"><b>INTERNATIONAL SEARCH REPORT</b></td><td>International application No.<br>PCT/JP2006/305572</td></tr>
</table>

| A. CLASSIFICATION OF SUBJECT MATTER |
|---|
| ***H04J13/00***(2006.01) |
| According to International Patent Classification (IPC) or to both national classification and IPC |

| B. FIELDS SEARCHED |
|---|
| Minimum documentation searched (classification system followed by classification symbols) |
| ***H04J13/00***(2006.01) |

| Documentation searched other than minimum documentation to the extent that such documents are included in the fields searched |
|---|
| Jitsuyo Shinan Koho      1922-1996    Jitsuyo Shinan Toroku Koho    1996-2006<br>Kokai Jitsuyo Shinan Koho    1971-2006    Toroku Jitsuyo Shinan Koho    1994-2006 |

| Electronic data base consulted during the international search (name of data base and, where practicable, search terms used) |
|---|
| |

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-318266 A  (Mitsubishi Electric Corp.),<br>10 November, 2005 (10.11.05),<br>Full text; all drawings<br>(Family: none) | 1,2<br>9<br>3-8 |
| Y<br>A | JP 2004-159300 A  (Lucent Technologies Inc.),<br>03 June, 2004 (03.06.04),<br>Par. No. [0019]; Fig. 1<br>& US 2004/0085936 A1    & EP 1418785 A1<br>& KR 2004040330 A | 9<br>1-8 |
| Y<br>A | JP 2006-14304 A  (Samsung Electronics Co.,<br>Ltd.),<br>12 January, 2006 (12.01.06),<br>Par. Nos. [0019] to [0020]; Fig. 6<br>& US 2006/0003787 A1    & EP 1605605 A2 | 9<br>1-8 |

| [X] Further documents are listed in the continuation of Box C. | [ ] See patent family annex. |
|---|---|

| * Special categories of cited documents: | |
|---|---|
| "A" document defining the general state of the art which is not considered   to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>25 May, 2006 (25.05.06) | Date of mailing of the international search report<br>06 June, 2006 (06.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

<table>
<tr><td colspan="2" align="center">**INTERNATIONAL SEARCH REPORT**</td><td>International application No.<br>PCT/JP2006/305572</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-252388 A  (Sony Ericsson Mobile Communications Kabushiki Kaisha), 15 September, 2005 (15.09.05), Full text; all drawings & WO 2005/083908 A1     & EP 1617575 A1 | 1-9 |
| A | WO 2003/096577 A1  (Mitsubishi Electric Corp.), 20 November, 2003 (20.11.03), Full text; all drawings & EP 1505746 A1        & US 2005/0164641 A1 & US 2006/0002339 A1     & EP 1615356 A2 & JP 2005-287070 A        & JP 2006-5965 A | 1-9 |
| A | WO 2003/065628 A1  (Mitsubishi Electric Corp.), 07 August, 2003 (07.08.03), Full text; all drawings & EP 1404031 A1          & US 2004/0100925 A1 & KR 2004011502 A | 1-9 |

Form PCT/ISA/210 (continuation of second sheet) (April 2005)

**EP 1 998 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003199173 A
- US 200300876058 A1